(19) Europäisches Patentamt

European Patent Office

Office européen des brevets

(11) **EP 1 731 854 A1**

(12) **EUROPEAN PATENT APPLICATION**
published in accordance with Art. 158(3) EPC

(43) Date of publication:
**13.12.2006 Bulletin 2006/50**

(51) Int Cl.:
**F25B 41/00** (2006.01)    **F16L 55/04** (2006.01)
**F04B 11/00** (2006.01)

(21) Application number: **05727458.1**

(22) Date of filing: **29.03.2005**

(86) International application number:
**PCT/JP2005/005897**

(87) International publication number:
**WO 2005/095875 (13.10.2005 Gazette 2005/41)**

(84) Designated Contracting States:
**DE ES FR GB IT**

(30) Priority: **30.03.2004 JP 2004099971**

(71) Applicants:
• **MITSUBISHI DENKI KABUSHIKI KAISHA**
**Chiyoda-ku, Tokyo 100-8310 (JP)**
• **Japan Aerospace Exploration Agency**
**Chofu-shi,**
**Tokyo 182-8522 (JP)**

(72) Inventors:
• **YAMASHITA, Kouji,**
**c/o Mitsubishi Denki K. K.**
**Tokyo 1008310 (JP)**
• **ISHII, Tatsuya,**
**Japan Aerospace Exploration Agency**
**Chofu-shi,**
**Tokyo 1828522 (JP)**

(74) Representative: **Pfenning, Meinig & Partner GbR**
**Patent- und Rechtsanwälte**
**Theresienhöhe 13**
**80339 München (DE)**

(54) **FLOW PATH DEVICE, FREEZING CYCLE DEVICE, PRESSURE PULSATION REDUCING DEVICE, AND PRESSURE PULSATION REDUCING METHOD**

(57)    [Problems] In a reduction in fluid pressure pulsation, a large space has been required for liquid expansion and a larger pressure loss has been involved.

[Solving Means] A pressure pulsation reducing device has a flow path through which pressure pulsation is transmitted, an inner tube placed in the flow path and constructed so that most part of fluid flowing inside the flow path flows around the inner tube, and small holes provided in the inner tube for expelling jet flows into the flow path by a pressure difference between the inside and the outside of the inner tube. The jet flows are expelled from the inner tube to a contracted flow section provided around the outer periphery of the inner tube to reduce pressure pulsation of the contracted flow section.

FIG. 2

EP 1 731 854 A1

**Description**

Technical Field

The present invention relates to a technology for reducing pressure pulsation of a fluid such as a refrigerant or the like flowing through an inner part of a refrigerating cycle that constitutes, for example, an air-conditioning machine or a refrigerator.

Background Art

As a conventional device for reducing pressure pulsation, an expansion-type muffler that loses energy by a diffused reflection caused at an expansion portion formed by means of enlarging an area of a flow path in the middle of piping through which fluid flows is known. An effect of reducing the pressure pulsation by the expansion-type muffler reaches a relatively broadband.

Further, the conventional device that reduces the pressure pulsation is configured to have a structure such as that a portion having a large cross sectional area is provided between an inlet tube and an outlet tube, and that, at this portion, a plate having a plurality of penetrating holes is disposed in a manner to have no clearance between the plate and a periphery. Resulting from the structure described above, an effect is obtained in which a flow velocity of the flowing-in fluid is reduced by means of widening flowing path. Thus, the pressure pulsation is reduced because of the fluid passing through the plurality of penetrating holes in addition to the above mentioned effect. (Refer to the Patent Document 1.)

Furthermore, in the conventional device that reduces the pressure pulsation, the pressure pulsation is reduced by means of increasing sliding resistance of a sliding portion by decreasing a clearance between a valve body, through which the fluid passes, and the sliding portion, or the like manner. (Refer to the Patent Document 2.) .

Patent Document 1: Japanese Unexamined Patent Application Publication No. 6-101794 (FIGs. 1 through 3) Patent Document 2: Japanese Unexamined Patent Application Publication No. 11-270429 (FIGs. 1 through 6)

Disclosure of Invention

Problems to be Solved by the Invention

In a conventional expansion-type muffler type pressure pulsation reducing device that loses energy by means of a diffused reflection caused at an expansion portion, there have been problems such that a large ratio of the diameters of the front and back sides of the expansion portion has been required so as to increase a pressure pulsation reducing amount, and that a large space has been required so as to increase the reducing amount of the pressure pulsation.

Further, there has been another problem such as that, since a flowing path has a sharp enlargement or a sharp reduction, not only the loss of the pressure pulsation but also the loss of the pressure of the fluid per se occurs in a large amount, and the pressure of an outlet fluid is reduced in relation to that of an inlet fluid.

Furthermore, in a technology for reducing a clearance of the flow path where the fluid flows, there has been still another problem such as that the pressure loss of the fluid is large, and the pressure of the outlet fluid is brought to be reduced in relation to that of the inlet fluid.

Moreover, in a case that these conventional technologies are applied to a refrigerating cycle device, there has been a problem such as that efficiency of the refrigerating cycle device is reduced due to the pressure loss.

In addition, in a structure in which a contracted flow section is provided in the flow path, since the contracted flow section is arranged without a clearance with the periphery, the fluid has to pass the contracted flow section. Thus, there has been another problem that the fluid is stopped flowing in a case that the contracted flow section is clogged by means of foreign material, oil, or the like.

The present invention is made for solving the problems described above, and an object of the present invention is to obtain a device and a method for reducing the fluid pressure pulsation without requiring a large space.

A further object of the present invention is to obtain a device and a method for reducing only the pressure pulsation, while the pressure of the fluid that flows through an inner part is not too much decreased.

A Furthermore object of the present invention is to obtain a refrigerating cycle device with a reduced pressure pulsation without reducing efficiency.

Still another object of the present invention is to obtain a technology having high capability and high reliability for long-term operation, applicable even to a device having a pressure pulsation.

Means for Solving the Problems

A flow path device of the present invention includes an inner tube, which is disposed in an inner part of a flow path for allowing a fluid to flow to separate the flow of the fluid in the flow path so as to flow through an inner part and an outer part of the inner tube, a plurality of small holes, which are distributed in the inner tube for allowing the inner part and the outer part of the inner tube to communicate with each other, and a flow path resistive element, which is provided in the outer part or the inner part of the inner tube for generating a difference of a flow velocity of the fluid between the outer part and the inner part of the inner tube, so that a jet flow is expelled through the small holes from one side to the other side in the inner part and the outer part of the inner tube by a pressure difference between the inner part and the outer part of the inner tube, and a pressure pulsation transmitted in the flow path is reduced.

A method for reducing a pressure pulsation of the present invention includes the steps of separating a flow of a fluid into a plurality of flow paths in an outer tube by means of providing a flow path dividing device disposed in an inner part of the outer tube allowing the fluid to flow, for dividing the inner part of the outer tube; providing a flow path having a low flow velocity and a flow path having a high flow velocity on both sides of the flow path dividing device, by making a flow velocity of at least one flow path in the plurality of flow paths low; expelling a jet flow through a plurality of distributed small holes allowing two of the flow paths to communicate with each other, from a side where the flow velocity is low to a side where the flow velocity is high by means of a pressure difference caused by a difference of the flow velocity between the flow paths divided; and reducing the transmitted pressure pulsation by the fluid having the high flow velocity, by means of the expelled jet flow.

Advantages

The present invention is capable of providing a large pressure pulsation reducing effect in a small space. In addition, there is another effect in the present invention such as that only the pressure pulsation is reduced without too much deterioration of fluid pressure. For example, in a case that the present invention is applied to a refrigerating cycle device, there is further effect that since a pressure loss of the refrigerating cycle device is not caused, only the pressure pulsation can be reduced without reducing efficiency of the device, and thereby a device having high efficiency can be obtained. Further, in the present invention, even in a case that a clogging is caused by a foreign material, oil, or the like, a device having high reliability, in which the flow of the fluid is prevented from stopping, can be obtained.

Brief Description of the Drawings

[FIG. 1] FIG. 1 is a construction view illustrating a pressure pulsation reducing device of a first embodiment with respect to the present invention;

[FIG. 2] FIG. 2 is a construction view of a refrigerating cycle device in which the pressure pulsation reducing device of the first embodiment of the present invention is installed;

[FIG. 3] FIG. 3 is an illustration explaining a principle of pressure pulsation reduction by means of a small hole of the first embodiment of the present invention;

[FIG. 4] FIG. 4 is another illustration explaining the principle of the pressure pulsation reduction by means of the small hole of the first embodiment of the present invention;

[FIG. 5] FIG. 5 is still another illustration explaining the principle of the pressure pulsation reduction by means of the small hole of the first embodiment of the present invention;

[FIG. 6] FIG. 6 is an illustration explaining a result of an experiment showing a pressure pulsation reducing effect by means of the pressure pulsation reducing device of the first embodiment of the present invention;

[FIG. 7] FIG. 7 is another structure view illustrating the pressure pulsation reducing device of the first embodiment of the present invention;

[FIG. 8] FIG. 8 is still another structure view illustrating the pressure pulsation reducing device of the first embodiment of the present invention;

[FIG. 9] FIG. 9 is still another structure view illustrating the pressure pulsation reducing device of the first embodiment of the present invention;

[FIG. 10] FIG. 10 is still another structure view illustrating the pressure pulsation reducing device of the first embodiment of the present invention;

[FIG. 11] FIG. 11 is still another structure view illustrating the pressure pulsation reducing device of the first embodiment of the present invention;

[FIG. 12] FIG. 12 is still another structure view illustrating the pressure pulsation reducing device of the first embodiment of the present invention;

## EP 1 731 854 A1

[FIG. 13] FIG. 13 is still another structure view illustrating the pressure pulsation reducing device of the first embodiment of the present invention;

[FIG. 14] FIG. 14 is still another structure view illustrating the pressure pulsation reducing device of the first embodiment of the present invention;

[FIG. 15] FIG. 15 is a construction view of another refrigerating cycle device in which the pressure pulsation reducing device of the first embodiment of the present invention is installed;

[FIG. 16] FIG. 16 is a construction view of still another refrigerating cycle device in which the pressure pulsation reducing device of the first embodiment of the present invention is installed;

[FIG. 17] FIG. 17 is a construction view of a compressor in which the pressure pulsation reducing device of the first embodiment of the present invention is installed;

[FIG. 18] FIG. 18 is still another structure view illustrating the pressure pulsation reducing device of the first embodiment of the present invention;

[FIG. 19] FIG. 19 is a construction view of still another refrigerating cycle device in which the pressure pulsation reducing device of the first embodiment of the present invention is installed;

[FIG. 20] FIG. 20 is a construction view of still another refrigerating cycle device in which the pressure pulsation reducing device of the first embodiment of the present invention is installed;

[FIG. 21] FIG. 21 is a construction view of still another refrigerating cycle device in which the pressure pulsation reducing device of the first embodiment of the present invention is installed;

[FIG. 22] FIG. 22 is a construction view of still another refrigerating cycle device in which the pressure pulsation reducing device of the first embodiment of the present invention is installed;

[FIG. 23] FIG. 23 is still another structure view illustrating the pressure pulsation reducing device of the first embodiment of the present invention;

[FIG. 24] FIG. 24 is still another structure view illustrating the pressure pulsation reducing device of the first embodiment of the present invention;

[FIG. 25] FIG. 25 is still another structure view illustrating the pressure pulsation reducing device of the first embodiment of the present invention;

[FIG. 26] FIG. 26 is a layout plan of the small holes of the pressure pulsation reducing device of the first embodiment of the present invention; and

[FIG. 27] FIG. 27 is still another structure view illustrating the pressure pulsation reducing device of the first embodiment of the present invention.

Reference Numerals

| | |
|---|---|
| 1: | influx fluid |
| 2: | efflux fluid |
| 3: | mainstream |
| 4: | contracted flow section |
| 5: | secondary flow |
| 10: | outer tube |
| 11: | inner tube |
| 12: | small hole |
| 13: | inserted tube |
| 14: | lid |
| 15: | inner tube supporting member |
| 16: | pressure recovery portion |
| 17: | flow path guide |
| 18: | flow path diaphragm |
| 20: | compressor |
| 21: | condenser |
| 22: | air blower for condenser |
| 23: | diaphragm device |
| 24: | evaporator |
| 25: | air blower for evaporator |
| 30: | pulsation reducing device |
| 40: | pump |
| 41: | motor |

42:    compression chamber
43:    oil separator

Best Mode for Carrying out the Invention

First Embodiment

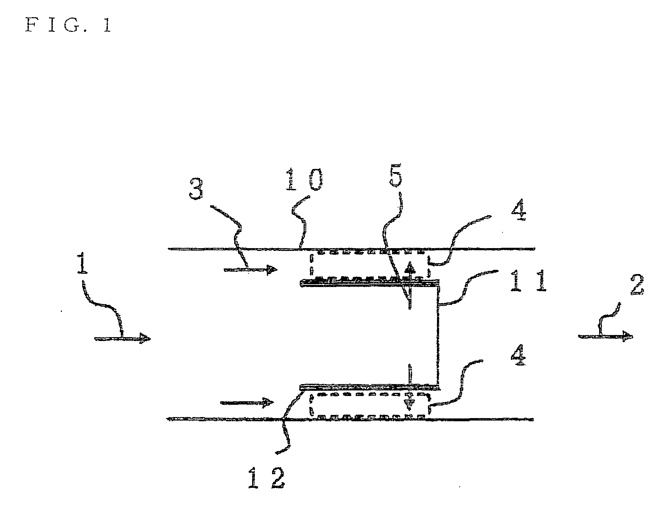

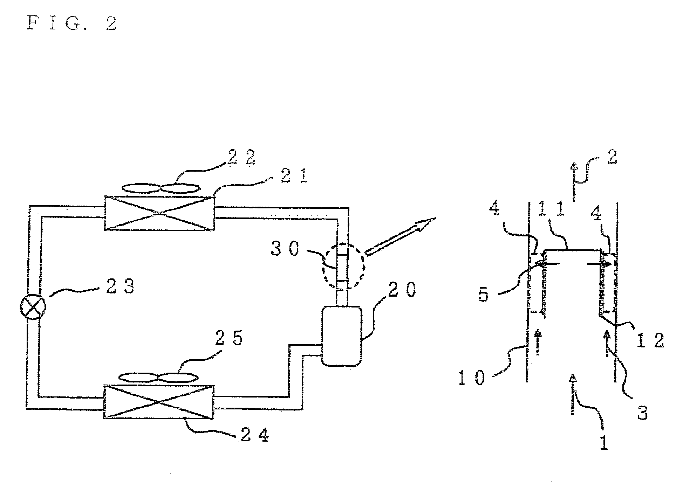

FIG. 1 is a construction view of a fluid pressure pulsation reducing device illustrating a first embodiment with respect to the present invention, and FIG. 2 is a construction view of a freezing cycle device in which the pressure pulsation reducing device 30 is installed. In the figure, a gas refrigerant of high temperature and high pressure compressed by means of a compressor 20 is condensed into a liquid refrigerant by means of a condenser 21, evaporated by means of an evaporator 24 after being decompressed by means of a diaphragm device 23, formed to be a gas refrigerant of low temperature and low pressure, and inhaled into the compressor 20. In the condenser 21, an air blower 22 for condenser is provided and a heat exchange is performed between heat of the condenser and that of air. In the evaporator 24, an air blower 25 for evaporator is provided, and a heat exchange is also performed between heat of the evaporator and that of the air.

The compressor 20 has a structure having an electric-drive type motor at an inner part thereof, and a clearance volume in a compression chamber is varied by a rotation of a rotor resulting from a rotation of the motor. A fluid being inhaled into the compression chamber is compressed, and after pressure value of the fluid reaches a specified pressure value or a specified rotation angle, the fluid is expelled from the compressor at once. Accordingly, the pressure of the fluid expelled from the compressor 20 has a pulsation component including a higher harmonic wave, in which a value obtained by multiplying the number of rotations of the compressor by the number of compression chambers is defined as a basic frequency. Further, it is natural that the pressure of the side of the fluid inhaled into the compressor 20 has a pulsation component including a higher harmonic wave, in which the value obtained by multiplying the number of rotations of the compressor by the number of the compression chambers is also defined as the basic frequency. In the compressor 20, there are various types such as a rotary type, a scroll type, a reciprocating type, a screw type, and the like, and the pressure pulsation occurs in any of the types thereof.

When the pressure pulsation is transmitted, the condenser 21, the expansion device 23, the evaporator 24, or tubes that connect these devices, in which the fluid flows, are vibrated, and this is a cause of occurring noise to the periphery. Therefore, it is required to install the pressure pulsation reducing device 30 in a flow path in the vicinity of the compressor 20 so as to reduce the pressure pulsation of the fluid. Further, in a case such as that a pressure switch is provided on a discharging outlet side or an intake side of the compressor to set limitation in a pressure range of operation, the pressure switch detects the pressure value higher than an average value of the pulsation when finding out a higher pressure side, and detects the pressure value lower than the average value when finding out a lower pressure side so as to perform a measure for safety. The fluid pressure pulsation at the installing portion of the pressure switch is required to be reduced by means of the pressure pulsation reducing device so as to widen an actual range of the operation of the device. Furthermore, in a compression resistance design for the devices, a material, a dimension, and a shape are determined in consideration of the pulsating part higher than the average value, and therefore the designed actual compression strength for the devices can be determined to be smaller by means of reducing the considered pressure pulsation, and the cost can be reduced.

In the structure of the fluid pressure pulsation reducing device 30, shown in FIGs. 1 and 2, an inner tube 11 is disposed in an inner part of an outer tube 10 that serves as a flow path along a flow of the fluid, such as an influx fluid 1 to an efflux fluid 2. At this moment, the fluid flows through an inner part of the inner tube 11 and an outer part of the inner tube 11, which is an inside of the outer tube 10, as a main stream 3 being separated. The inner tube 11 is provided with a number of small holes 12 that allow the inner part of the inner tube 11 to communicate with the outer part thereof, and the flow is suppressed at a flowing-out side by means of a flow path resistive element formed of a structure being closed by a closing plate, almost closed structure, in which a slit is formed so as to allow only few amount of fluid to flow, or a structure provided with a small opening or the like. Therefore, the fluid in the inner part of the inner tube is allowed to flow into a contracted flow section 4 from the small holes 12. As a result, the fluid flowing through inside the outer tube 10 flows through an outer part of the inner tube increasing the flow velocity at the contracted flow section 4, because the flow of the influx fluid 1 in the inner part of the inner tube is limited by means of the flow path resistive element at a part where the inner tube 11 is disposed, and becomes an efflux fluid. Since the pressure pulsation can be reduced by means of the internal structure, such as the piping or the like as described above, a large special space is not necessary. In an expansion-type muffler, in many cases, the outer diameter of the tube is determined to be equal to or more than an extent of two times the outer diameter of the tubes connected to the front and back sides of the expansion-type muffler. However, in a case that the above-described structure is employed, a pressure pulsation reducing device having an outer diameter equal to an extent of the diameter of the tubes connected to the front and back sides of the pressure pulsation reducing device, or smaller than the outer diameter of the tubes connected to the front and back sides of the pressure pulsation reducing device can be realized, while suppressing a pressure loss in a smaller amount. Incidentally, in consideration of the installing space, it is preferable for the outer diameter to be in an extent of equal to or less than the diameter of the tubes connected to the front and back sides of the pressure pulsation reducing device. However, even when the pressure pulsation reducing device has an outer diameter equal to or less than an extent of 1.2 times that of the tubes connected to the front and back sides of the pressure pulsation reducing device, or an outer diameter slightly exceeding the above, the pressure pulsation reducing device 30 can be sufficiently housed in an area that does not require a special space for the piping to house the flow path resistive element that forms the pressure pulsation reducing device 30. In a case that the pressure pulsation reducing device 30 is applied to the refrigerating cycle, even when the pressure pulsation reducing device 30 is provided at a position from the discharging outlet of the compressor that raises the pressure of the fluid to be high pressure and discharges fluid, to an intake of the compressor that inhales the fluid, it is sufficient to connect a tube having an approximately same diameter as that of the piping for originally circulating the fluid. In a case that the diameter of the tube is changed for a gas side and a liquid side or the like, there is no need to configure the diameter of the tube to be made particularly large so as to exert a muffler effect in a manner such that the diameter is determined to be more than two times that of the piping connected to the front and back sides of the pressure pulsation reducing device 30. As a result, even when the pressure pulsation reducing device 30 is installed, a space for a container for housing the piping, an outdoor unit, or the like can be suppressed to be small.

In the present invention, a pressure difference is caused to occur between an inner part and an outer part of the inner tube by means of changing a flow velocity of the outer part and the inner part of the inner tube 11. For that, it is sufficient to provide the resistive element to reduce the flow velocity of the fluid at a flowing-out side of the inner tube, as shown in FIG. 1. A flowing-out end portion may be closed, or a hole may be formed without closing the same. Alternatively, a fluid resistive element to reduce the velocity of the liquid flow may be provided, while causing the flow to be smooth by means of providing a slit-shaped opening or a current plate. Further, although a structure in which the flow velocity in the inner part of the inner tube is reduced and the contracted flow section is provided in the outer part of the inner tube is explained referring to FIGs. 1 and 2, the inner part of the inner tube may serve as the contracted flow section and the fluid resistive element that closes the flow may be provided at the flowing-out end side of the outer part of the inner tube. In addition, although two flow paths are provided in FIGs. 1 and 2, and the difference between the flow velocities is utilized, the present invention is configured to consume energy of the fluid in the flow path where the high pressure fluid having the pressure pulsation flows, by means of changing the flow path in the tube with a size that is approximately the same as the diameter of the piping connected to the front and back sides of the pressure pulsation reducing device 30, and is configured to thereby reduce the pressure pulsation. Accordingly, the inner tube may have a plurality of flow paths therein, for example, the inner tube having a plurality of above-explained structures. Instead of employing the above described structure, even one path can be sufficient to obtain the effect of the present invention by providing only the flow path resistive element. That is, although the explanation is made illustrating the structure having the contracted flow section at the outer part of the inner tube, while reducing the internal flow velocity, it may be applicable to provide the fluid resistive element that closes the flow at the flowing-out end side at the outer part of the inner tube, while making the inner part of the inner tube to be the contracted flow section. Alternatively, the flow in the flow path or the flow path itself may be changed without existence of the inner tube or the like, for example, such a block of resistive element for the fluid may be provided that an inlet of the flow is formed to be a plate shape and an outlet of the flow is formed to have a smaller dimension. Thus, in the present invention, the structure is configured such that no significant enlargement is required for the diameter of the piping, and dynamic pressure is varied by providing the fluid resistive element to vary the flow in the flow path with almost no change of the diameter of the piping. Accordingly, the pressure pulsation can be reduced while suppressing reduction of the pressure, without increasing an entire amount of fluid by thickening the piping. In addition, the present invention is not configured to reduce energy of a specific wavelength by providing a structure of a resonance, and a jet flow is expelled into the flow of a main flow path, and thereby pulsation energy existing in the flow of the main flow path is reduced by means of energy of the jet flow. Therefore, the present invention is applicable to whatever wavelength of the pulsation, and the effect of pulsation reduction reaches a broadband.

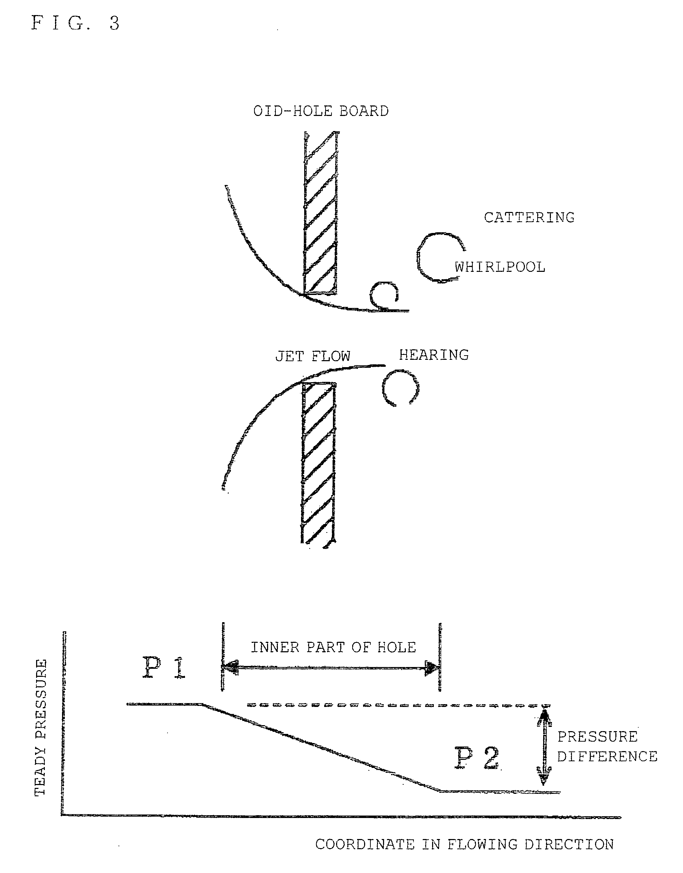

Further, when a pressure pulsation exists in a fluid, the pressure of the fluid periodically fluctuates on the plus side and the minus side in relation to the steady pressure. It becomes clear by recent research that when such a flow of the fluid is changed by means of expelling a fluid having a certain extent of flow velocity from a small hole, or the like manner, the jet flow expelled from the small hole has an effect to reduce the pressure pulsation. There are various theories as to the pressure pulsation reducing mechanism, and although it is not completely clarified, a theory is described in "Attenuation of sound in a low Mach number nozzle flow" by M.S. HOWE, from page 209 to 229 in "Journal of Fluid Mechanics" published in 1979, in which a part of energy of the jet flow is used for generation energy of a whirlpool. Next, the mechanism of the pressure pulsation reduction by means of the whirlpool is explained on the basis of this phenomenon, referring to FIGs. 3 through 5.

When a pressure difference is formed between P1 and P2 at both sides of a void-hole board, as shown in the figure, a jet flow that flows through an inner part of the hole is formed corresponding to the pressure difference (FIG. 3). According to HOWE, a part of the energy of the jet flow is converted into the energy of the whirlpool at this moment, and the whirlpool is generated at a downstream side of the jet flow by a shearing action with a fluid of the periphery. The larger the difference between the velocity of the jet flow and the velocity of the fluid of the periphery is, the larger the shearing action becomes. The generated whirlpool is drifted by the jet flow and is caused to leave from a void-hole portion. In the process of moving, the whirlpool is converted into heat energy, i.e., temperature rising of the fluid of the periphery, and pressure energy, i.e., release of a pulsation component to the fluid of the periphery by means of the shearing action or friction with the fluid of the periphery, and is finally scattered. That is, in the vicinity of the jet flow, the generation of the whirlpool and scattering of the same are consecutively repeated, and the periphery of the void-hole portion is formed to be a pulsating space including the jet flow and the whirlpool. The dimension of the whirlpool formed by means of the jet flow at the void-hole portion depends on a diameter d of the hole, and when the velocity of the jet flow is defined as U, a frequency f of the pressure pulsation caused by the whirlpool is expressed by following formula.

[Formula 1]

$$f \propto U/d$$

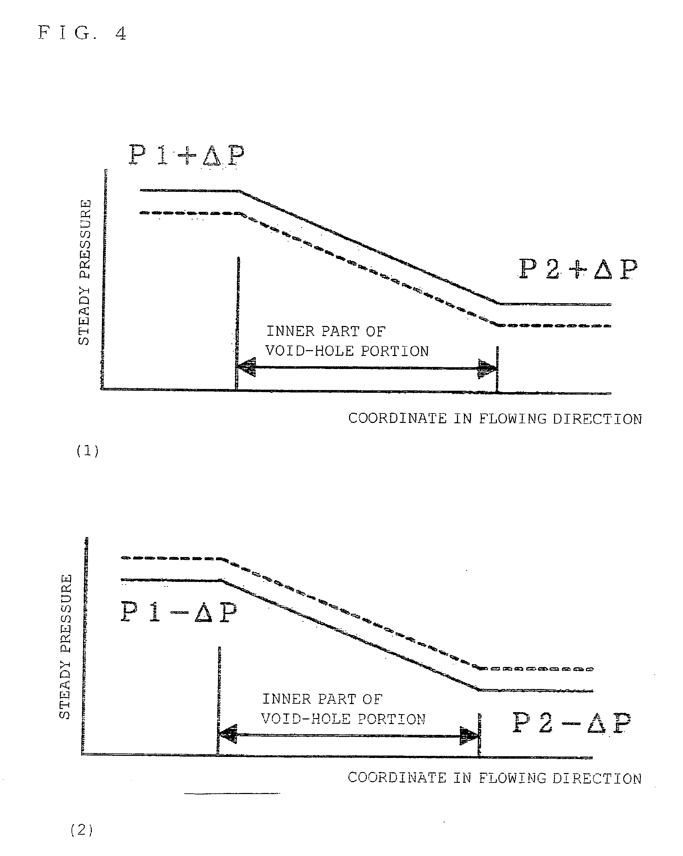

At this moment, a period of generating the whirlpool is found to be 1/f, and a wavelength is found to be sound-velocity/f Further, a case is considered that a pressure pulsation whose wave length $\lambda$ is sufficiently larger than the diameter of the hole ($\lambda$>>d) enters in the vicinity of the jet flow. As described earlier, the pressure pulsation is periodically fluctuates on the plus side and the minus side in relation to the steady pressure. Accordingly, in a case that the high pressure component or the low pressure component of the pressure pulsation enters in the vicinity of the jet flow, the steady pressure of an upstream side and a downstream side of the hole is raised or lowered at the moment of generating of the whirlpool, as shown in FIG. 4.

In a case that the high pressure component of the pressure pulsation enters and the steady pressure is raised (Refer to FIG. 4 (1)), an amount of pressure variation at both sides of the void-hole portion is equal to each other and a pressure difference between the front and back sides of the void-hole portion is invariable. However, the steady density $\rho$ rises to a rising extent of the pressure. When the pressures of both sides of the void-hole portion are defined as $P_1$ and $P_2$, respectively, a ady velocity U of the jet flow is expressed by following formula according to Bernoulli's theorem.

[Formula 2]

$$U \propto \sqrt{\frac{P1 - P2}{\rho}}$$

Thus, when the steady density $\rho$ is raised, the steady velocity U of the jet flow is lowered. As a result, when the steady pressure is raised, namely when pressure fluctuation $\Delta P$ satisfies the following inequality, $\Delta P > 0$, the steady velocity is reduced, namely the following inequality is satisfied: $\Delta U < 0$.

On the contrary, in a case that the low pressure component of the pressure pulsation enters and the steady pressure is lowered (Refer to FIG. 4(2)), similarly to the above described, since the pressure difference is invariable and the steady density is reduced, the velocity of the jet flow increases. As a result, when the steady pressure is lowered, namely when pressure fluctuation $\Delta P$ satisfies the following inequality, $\Delta P < 0$, the steady velocity is increased, namely the following inequality is satisfied: $\Delta U > 0$. Internal space dynamic energy E in the vicinity of the void-hole portion is found by integrating a product of the pressure fluctuation. $\Delta P$ and the velocity fluctuation $\Delta U$ for one period, namely, the same is expressed by the following formula according to Newton's second law.

[Formula 3]

$$E = \int (\Delta P \cdot \Delta U) \cdot dt$$

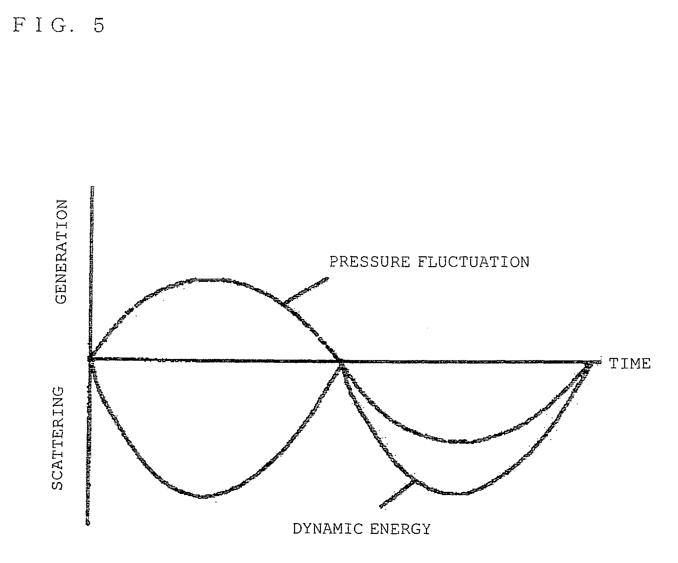

Accordingly, as described above, when the inequality, ΔP > 0, is satisfied, the inequality, ΔU < 0 is satisfied, and when the inequality, ΔP < 0, is satisfied, the inequality, ΔU > 0, is satisfied, and the dynamic energy E is always brought to be a negative number (Refer to FIG. 5). The fact that the dynamic energy is brought to be a negative number means that the pressure pulsation energy is scattered, and the pulsation energy is decreased, namely the pressure pulsation is reduced. In addition, since the pressure pulsation interferes with the whirlpool and thereby loses the energy when the wave length of pressure pulsation of the main stream is fully larger than that of the whirlpool generated by means of a secondary flow, a pressure pulsation reducing effect is exerted. Accordingly, the pressure pulsation reducing effect can securely be obtained in a lower frequency band.

Further, an interval between the small holes in a direction orthogonal to the flow of the main stream is required to be fully small in relation to the wavelength of the pressure pulsation of the main stream. This is because, when the interval between the small holes is larger than the wavelength of the pressure pulsation, the pressure pulsation slips through between the whirlpools generated at the small holes. However, on the other hand, although the interval between the small holes in a flowing direction of the main stream, which is longer than the wavelength of the pressure pulsation, is not objectionable the number of the whirlpools generated at the small holes is decreased and the pressure pulsation reducing effect is decreased by that much. Since such small holes are provided and distributed over an entire wall surface of the inner tube, the device is formed to be strong against clogging caused by commingling of foreign object or the like, and the device having high reliability for long term operation can be obtained.

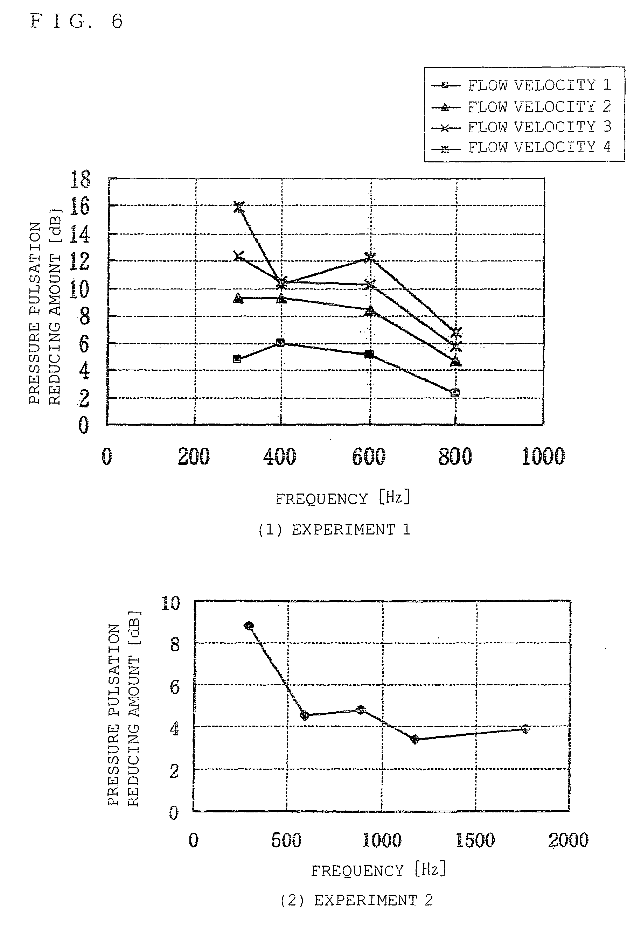

FIG. 6 illustrates a result of experiment for confirming an effect of the pressure pulsation reducing device with respect to the present invention. This experiment is performed by installing a void-hole tube 11 in a flow path 10, where the pressure pulsation is transmitted, and by introducing the jet flow into the flow path through the void-hole portion which is small holes 12 of the void-hole tube. Further, experiment is performed to measure a pressure pulsation reducing amount for in comparison with the case that the jet flow does not exist. In the figure, a horizontal axis indicates the frequency of the pressure pulsation, and a vertical axis indicates the pressure pulsation reducing amount. The experiment 1, shown in FIG. 6(1) and the experiment 2, shown in FIG. 6(2) are the result of measurement of different experiments. The experiment 1 indicates the result of the measurement for the case in which the fluid is air and a cross-section area of the outer tube is about 200 $cm^2$, and the velocity of the jet flow is varied in the experiment. The flow velocity of the jet flow, shown in the figure has a following relationship: Flow velocity 1 < Flow velocity 2 < Flow velocity 3 < Flow velocity 4. Further, the experiment 2 is performed in a condition such as that the fluid is a cooling medium (R407C, overheating gas) and the cross-section area of the outer tube is about 21 $mm^2$, and a result of measurement to the experiment of generating the pressure pulsation by means of a screw-type compression machine is shown. In either case, it is shown that the pressure-pulsation is reduced in a case that the jet flow exists and it is found that an effect by the jet flow exists. In particular, at the low frequency band, the pressure pulsation reducing effect is significantly obtained and it is found that the high flow velocity of the et flow provides a large pressure pulsation reducing effect. That is, when the pressure difference between both sides of the small hole is made large in relation to the pressure pulsation of low frequency, a large effect is obtained.

Furthermore, even when the fluid is the air or a fluorocarbon gas refrigerant, the pressure pulsation reducing effect is obtained. According to the theory, it is clear that when fluid is a material that is allowed to form a whirlpool by means of a jet flow, any fluid is possible to obtain the similar effect. Further, regardless of whether the cross-section area of the flow path is large or small, the pressure pulsation reducing effect is obtained, and it is found that the pressure pulsation reducing effect is exerted without depending on a size of the flow path. Moreover, in FIG. 6, the reason why the pressure pulsation reducing effect of the experiment 2 is smaller than that of the experiment 1 is not due to the size of the flow path cross-section area but the difference between the areas of the small hole portions. In addition, it is also found to be clear by another experiment that the smaller the diameter of the hole is, the more it is desirable.

Incidentally, in FIG. 2, shown earlier, the pressure pulsation reducing device 30, in which the above-described mechanism is applied, is installed at the expelled side of the compressor 20 in the refrigerating cycle. The inner tube 11 is provided in the pressure pulsation reducing device 30, and the inner tube 11 is constructed such that one end is opened and the other end is closed. In addition, a number of small holes 12 are provided on a peripheral wall surface of the inner tube 11. Further, the open end of the inner tube 11 looks toward an upstream side, and the closed end thereof looks toward a downstream side here. At this moment, when operation of the device is started, the fluid 1 that flows into the pressure pulsation reducing device 30 flows through a flow path between the outer tube 10 and the inner tube 11, i.e., the contracted flow section 4 where flowing resistance is small. This is because the inner tube 11 has a structure, in which an end of the inner tube is closed, and a plurality of small holes are opened around the periphery. Accordingly, the fluid in the inner tube 11 is almost in a static condition, and the outer part of the inner tube 11 is brought to be in a condition that fluid having high flow velocity is flowing. According to the Bernoulli's theorem of fluid dynamics, the sum of static pressure and dynamic pressure of the fluid in each part of the flow is constant, and the dynamic pressure is proportional to the square of the flow velocity. That is, when the static pressure of the inner part of the inner tube is defined as $P_1$, the static pressure of the outer part of the inner tube is defined as $P_2$. the flow velocity of the contracted flow section is defined as $V_2$, the density of the fluid is defined as p, the amount of flow volume of the fluid is defined as Q, and the cross-section area of the contracted flow section is defined as A, the following formula is satisfied.

[Formula 4]

$$P_1 - P_2 = \frac{1}{2} \cdot \rho \cdot v_2^2 = \frac{1}{2} \cdot \rho \cdot \left(\frac{Q}{A}\right)^2$$

Accordingly, in the contracted flow section 4, the dynamic pressure corresponding to the flow velocity occurs. However, the dynamic pressure does not occur in the inner part of the inner tube 11, and the static pressure $P_1$ in the inner part of the inner tube 11 is brought to be larger than the static pressure $P_2$ in the contracted flow section. Accordingly, since a pressure difference (= $P_1$-$P_2$) occurs between both ends of a small hole 12 provided in the peripheral wall surface of the inner tube 11, a secondary flow is generated via the small hole 12. At this moment, the flow velocity $v_h$ of the secondary flow is expressed by following formula. Even in a case that the flow velocity exists in the inner part of the inner tube, the flow velocities at the outer part and the inner part are different, and therefore the dynamic pressure is different. Further, since the entire pressure composed of the dynamic pressure and the static pressure is constant as described in the aforementioned explanation, a difference of the static pressure between the outer part and the inner part is generated resulting in causing a jet flow on the basis of the difference.

[Formula 5]

$$v_h = \sqrt{\frac{2 \cdot (P_1 - P_2)}{\rho \cdot \xi}}$$

Further, the mark $\xi$ in the formula is a flow loss coefficient of the fluid, and although when a hole-opening rate is large, $\xi$ is 1. However, when the hole-opening rate is decreased, the fluid is brought to be hard to flow so that the value of $\xi$ increases. When the hole-opening rate is small and the flow velocity of the main stream is not so high, the flow loss coefficient is in an extent of 3. However, when the flow velocity of the main stream is brought to be high, the secondary flow becomes hard to be caused and required to be treated as a larger value.

In addition, the fluid that is expelled toward the contracted flow section through small holes 12 joins together with the main stream 3 that is passing through the contracted flow section, and is allowed to flow out from the pressure pulsation reducing device 30. When a flow that passes through the small holes 12 is formed, the pressure pulsation reducing effect is generated by means of the mechanism explained earlier. Accordingly, the pressure pulsation of the cooling medium that is allowed to flow into the pressure pulsation reducing device 30 is reduced at a portion where the small holes 12 are formed. When the pressure pulsation of the cooling medium is reduced, the noise caused by the vibration of the tube arrangement is prevented from occurring.

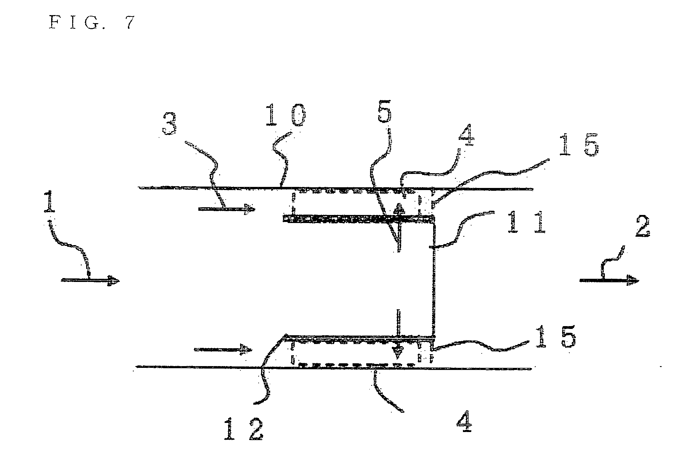

Further, in FIGs. 1 and 2, although the inner tube may be held without being fixed in the flow in principle, the inner tube is required to be fixed to a certain position in practice. Therefore, the inner tube is fixed to the outer tube by means of some solid member. However, since the fixing member has to be prevented from disturbing the flow of the main stream, punching metal having a large hole-opening rate, or a fixing member having a large opening area is desirable to be used for an inner tube supporting member 15, as shown in FIG. 7.

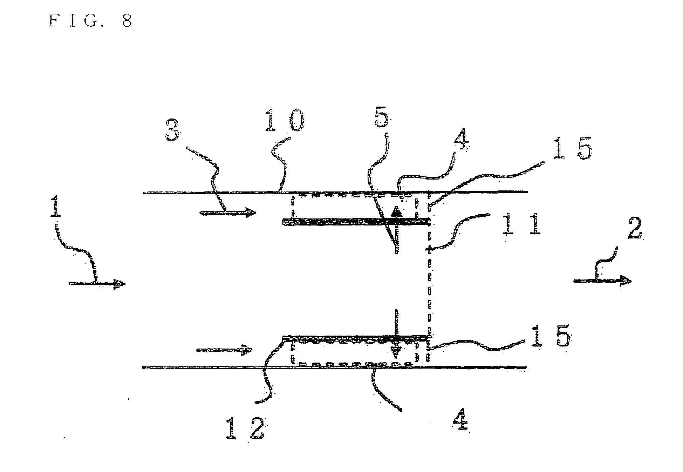

Furthermore, the inner tube is effective as long as it is formed to allow the main stream to pass through the outer part of the inner tube, and the closed end of the inner tube (bottom portion) is not necessary to be completely closed. For example, as shown in FIG. 8, a small hole may be formed at the closed end of the inner tube. By such a construction, the pressure pulsation reducing amount becomes larger as an effect. In addition, in a case that the fluid includes lubricating oil, or in the like case, there is another effect that the lubricating oil can be prevented from being accumulated in the inner part of the inner tube. Further, at this time, it is not necessary for the small hole at a periphery of the inner tube and that at the bottom portion to have the same hole-opening rate, and the different diameters are applicable thereto.

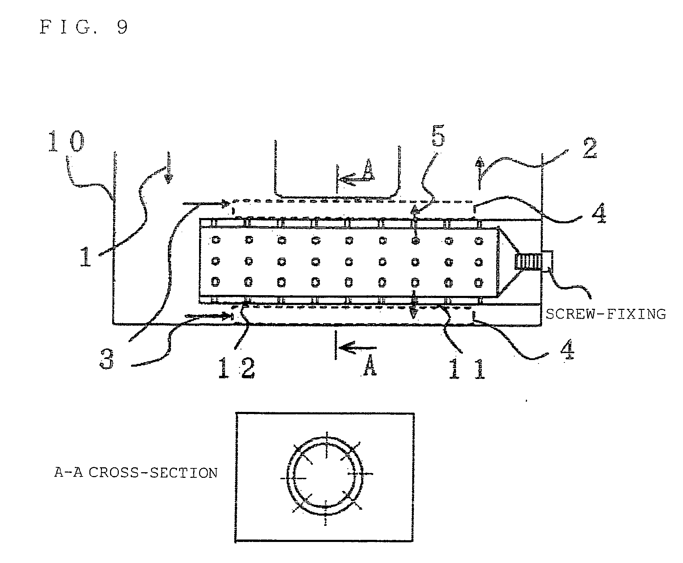

FIG. 9 is an illustration of an applying example of a case in which the pressure pulsation reducing device is attached to a bent tube line. In the case that the pressure pulsation reducing device is attached to the bent tube line, the inner tube 11 can be screwed on the outer tube 10 per se, as shown in the figure, and installing work for that becomes easy. A flowing condition or effect other than the above is identical to that in the aforementioned explanation. Further, the tube line (outer tube) does not necessarily have a cylindrical shape in whichever of a straight tube or a bent tube, and the tube line may be formed of a rectangular parallelepiped or more deformed shape, as shown in FIG. 9. In addition, the inner tube does not necessarily have a cylindrical shape as well, and the rectangular parallelepiped or more deformed shape may be applicable. It is clear from the principle that the pressure pulsation reducing effect is generated in any case.

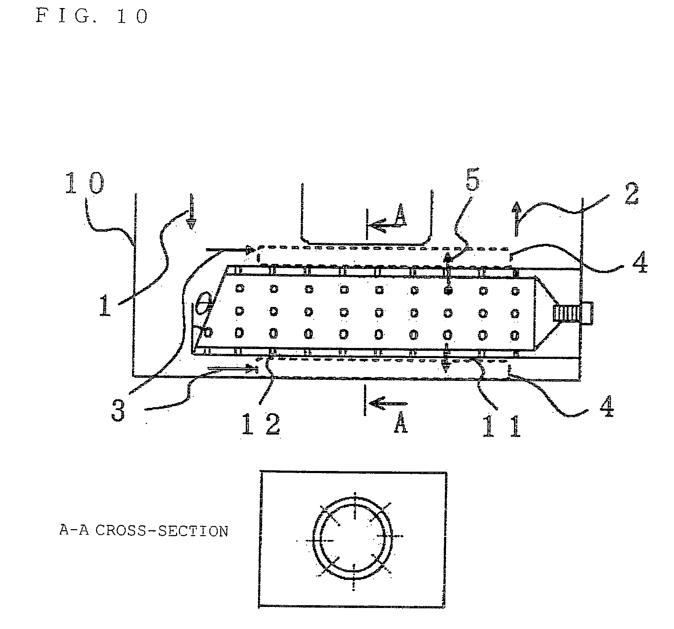

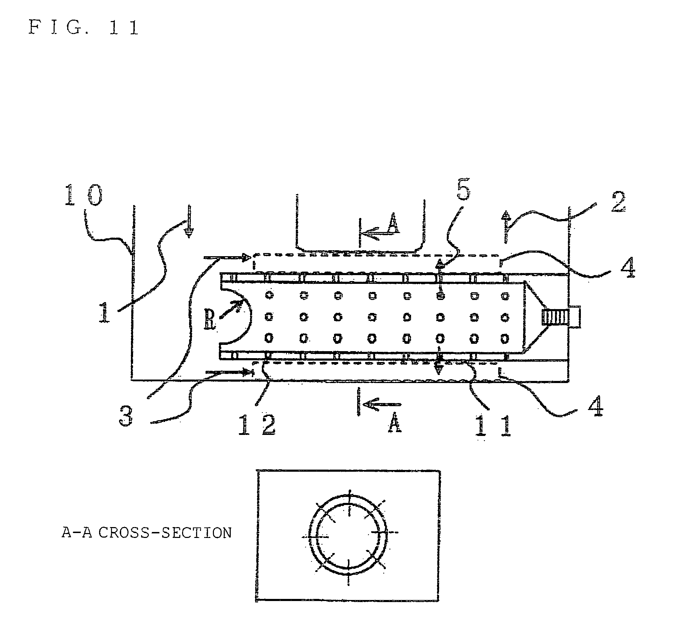

Furthermore, in the pressure pulsation reducing device having such a structure shown in FIG. 1 or 9, since the inner tube 11 is in a condition that one end is opened and the other end is closed, there is a possibility that a resonance occurs at the inner part of the inner tube 11. When the resonance occurs, an unnecessary pressure pulsation corresponding to a resonance frequency is additionally applied and it is not desirable. Hereinbelow, a structure of the pressure pulsation reducing device in which a countermeasure for the resonance is taken is explained. First, a method in which an angle is formed at the open end of the inner tube 11 in relation to a radial direction of the open end thereof is considered, as shown in FIG. 10. The resonance frequency has different values depending on a length of a tube. Accordingly, by means of forming the angle at the open end, the frequency at which the resonance occurs can be made different corresponding to a position. Although the resonance energy per se is not changed, a resonance band can be broadened. Therefore, resonance energy of a specific frequency can be decreased as a result, and unnecessary pressure pulsation is prevented from being applied. In other words, it can be said that if a length of the inner tube in an axial direction of flowing fluid differs depending on a difference of a position at an outer peripheral side, it can be a countermeasure for reducing the resonance. FIG. 11 illustrates a construction where a notch is formed at the open end. This construction can broaden the resonance band similarly to FIG. 10, and the resonance energy of a specific frequency can be reduced resulting in preventing the unnecessary pressure pulsation from being applied.

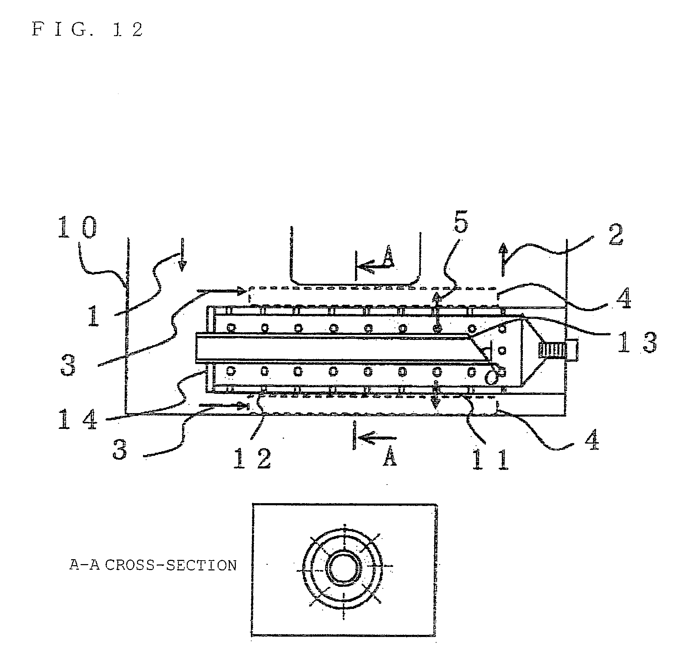

FIG. 12 illustrates a construction where an insertion tube 13 is inserted into the inner part of the inner tube 11, and a lid 14 is attached in a manner such that only one end of the insertion tube 13 is opened. By means of constructing in such a manner, an area where the resonance caused in the inner part of the inner tube is discharged outside can be reduced and if an inner diameter of the insertion tube is made small, the resonance energy can be reduced by friction in the inner part of the insertion tube, resulting in preventing the resonance from affecting an exterior. Incidentally, although a tip end of the insertion tube 13 may be formed to have a right angle, when forming a structure having an angle in relation to the radial direction, as shown in FIG. 12, the resonance can be prevented from occurring in the inner part of the insertion tube 13, and the effect is further increased.

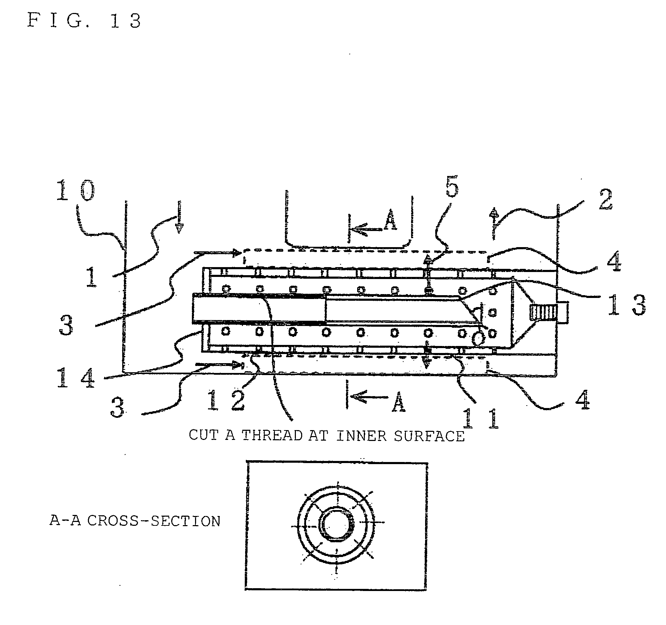

FIG. 13 illustrates a construction where a screw is formed in the inner part of the insertion tube 13 and reduction of the resonance energy is caused to occur much more in the inner part of the insertion tube 13, and the resonance can thereby be prevented from affecting the exterior. In addition, even if the inner part of the insertion tube 13 is formed to have a rough surface, it is clear that as much effect as that in the case when the screw is formed is exerted.

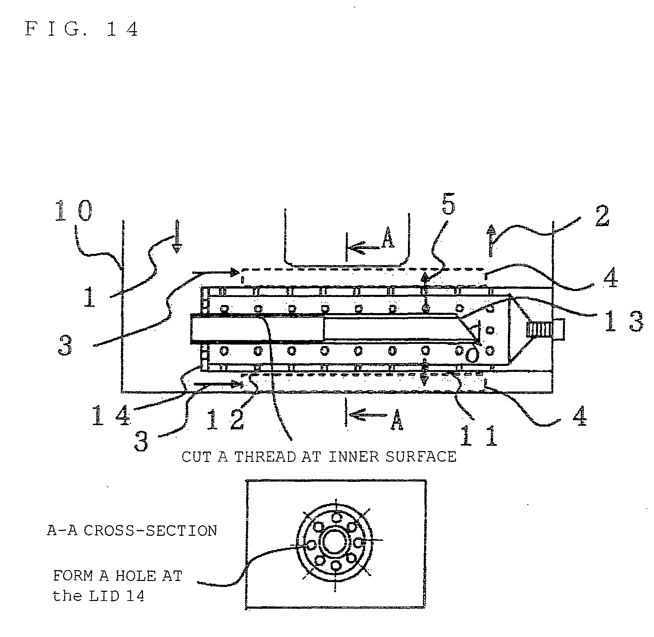

FIG. 14 illustrates a construction where holes are formed in the lid 14 on the side of the influx fluid. A position of the lid 14 corresponds to a position of a node of a velocity (abdomen of a pressure) for the resonance in the inner part of the inner tube and when holes are formed at this portion, a condition of a boundary can be changed. This results in an effect of suppressing the resonance to occur. In addition, in FIGs. 12 through 14, a method in which a screw is formed on an outer periphery of the insertion tube 13, or in which the outer periphery of the insertion tube 13 is formed to have a rough surface is also considered (not shown). In this case, there is an effect that the resonance is reduced in the inner part of the inner tube 13. Further, in all the structures, methods in which the screw is formed at inner surface of the inner tube 11 or in which the rough surface is formed at the outer periphery of the inner tube 11 is also considered. This results in obtaining the effect of reducing resonance in the inner part of the inner tube 11 (not shown).

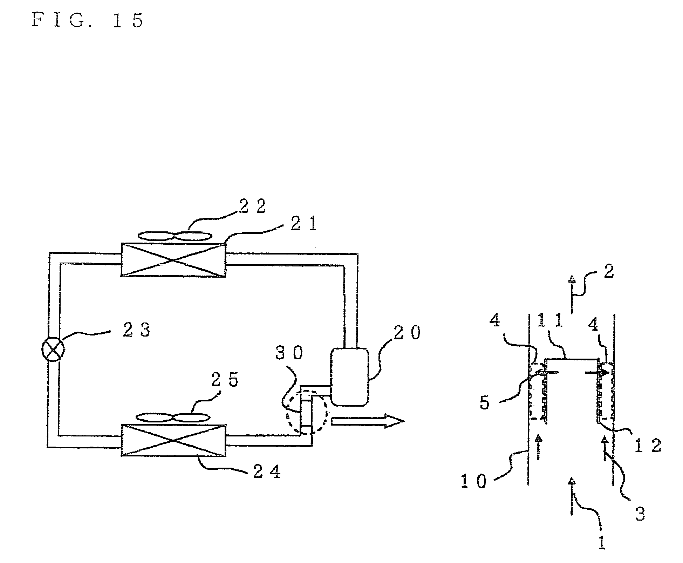

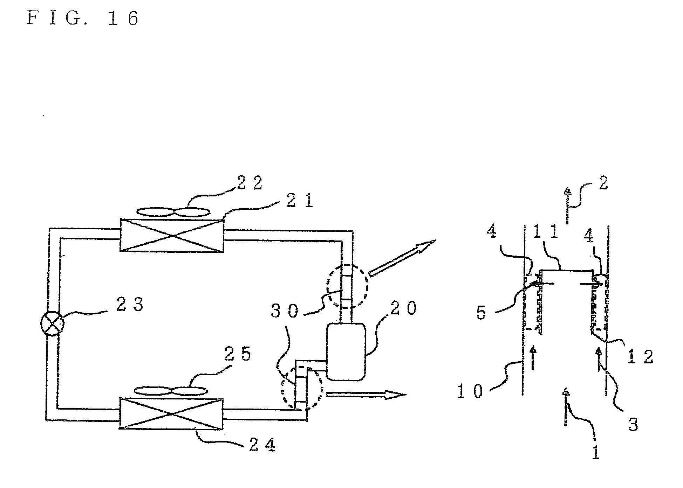

Furthermore, in the construction shown in FIGs. 12 though 14, the inner part of the inner tube 11 may be stuffed with wire wool, or the like. In this case, an effect that the resonance generated in the inner part of the inner tube 11 is reduced is obtained. Although the pressure pulsation reducing device 30 is explained illustrating a case in which the pressure pulsation device 30 is attached on the discharging side of the compressor of the refrigerating cycle device, referring to FIG. 2, the pressure pulsation reducing device 30 may be attached on the intake side of the compressor of the refrigerating cycle device, as shown in FIG. 15. This is because the pulsation of the compressor is also transmitted on the intake side. The pressure pulsation transmitted on the evaporator side can thus be reduced. In addition, the pressure pulsation reducing device 30 may be attached to both the discharging side and the intake side of the compressor of the refrigerating cycle device, as shown in FIG. 16. The pressure pulsation that is transmitted on both sides of the compressor can be reduced.

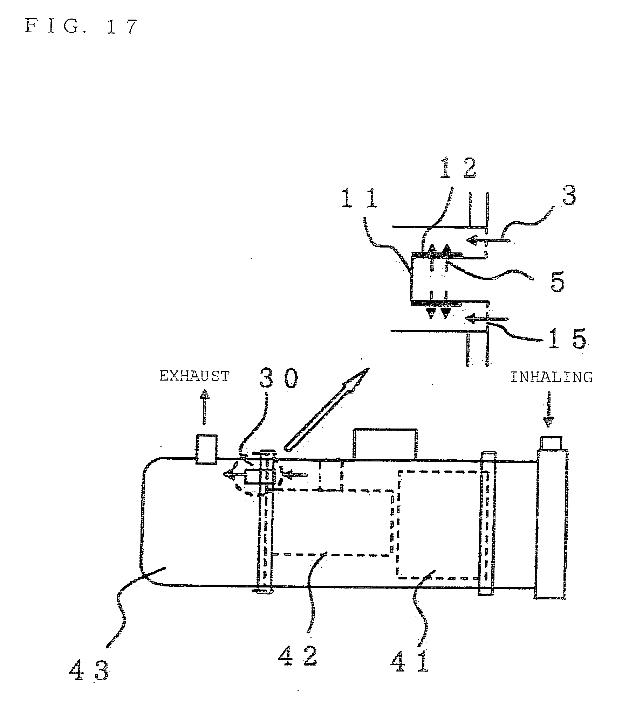

Incidentally, as shown in FIG. 17, since the pressure pulsation reducing device 30 utilizes a flow path, the same is capable of small sizing and has installation freedom. For example, the pressure pulsation reducing device 30 may be placed in an inner part of the compressor, which is a source of pulsation pressure, to reduce noise emitted from the compressor. FIG. 17 is an illustration of a screw-type compressor, and the screw-type compressor is attached between a discharging outlet of a compression chamber 42 of the compressor driven by a motor 41 and an oil separator 43. The pressure pulsation of the main stream 3 of the refrigerant that flowing into the oil separator is reduced by means of a secondary flow 5 from the small holes 12. Further, although the pressure pulsation reducing device 30 is installed at an influx inlet to the oil separator 43 in FIG. 17, the pressure pulsation reducing device 30 having a structure shown in FIGs.

9 through 14 may be applied to a flow path of the inner part of the compressor, and the same effect is exerted.

Incidentally, in the above described pressure pulsation reducing device, whatever the hole-opening rate (defined by sum of an opening area of the small holes in relation to a constant flow path area) of the small holes is, the pressure pulsation reducing effect is exerted. However, in theory, when the hole-opening rate of the small holes becomes large, the flow velocity of the fluid passing through a hole is required to be increased so that the identical pressure pulsation reducing effect is obtained. In consideration of the pressure difference that is feasible in a practical machine, although the hole-opening rate of the small holes is desirable to be a small hole-opening rate, such as 1% or 2%, practically, the hole-opening rate of the small holes is considered to be allowed in an extent of equal to or less than 10%. In still another viewpoint, in the present invention, a static pressure difference is required only for reducing the pressure pulsation. Therefore, in an example, when a cross-section area of the contracted flow section divided by an entire flow path cross-section area is about one half, the effect for suppressing the pressure pulsation is obtained.

Further, any number of the small holes is applicable in this pressure pulsation reducing device. However, when the identical pressure pulsation reducing effect is to be obtained, the identical opening area of the small holes is required to be kept, and when the diameter of the small holes is large, the number of the small holes has to be decreased so as to make the hole-opening rate of the small holes identical. The whirlpool is generated at an edge of the small hole, and a spreading out angle of the jet flow after expelling the jet flow is constant. Therefore, when the diameter of the small hole is large, the area where the influence of the jet flow reaches is brought to be small as a result, and the pressure pulsation reducing effect is brought to be small. Accordingly, the diameter of the small holes is most desirable to be the small diameter, such as 1 mm or 2 mm. However, practically, the diameter of the small hole is considered to be allowed to be equal to or less than an extent of 10 mm.

In addition, any fluid is applicable to the fluid flowing through the flow path. For example, air, a refrigerant, of a single component such as R22 or the like, mixed refrigerants composed of three-component system such as R407C, mixed refrigerants composed of two-component system such as R410A, HC refrigerant such as propane or the like, natural refrigerant such as $CO_2$ or the like, steam, natural gas, city gas, or the like can be used. In particular, the pressure pulsation reducing device is effective to be applied to a home-use electric appliances or the like having small size and requiring suppression of occurrence of noise or vibration, and high efficiency. Further, in a large-sized air-conditioner, such as a chiller, or a large-sized refrigerator, the pressure pulsation reducing device is extremely effective because a large-sized pressure pulsation reducing device cannot be installed due to a problem of installation space. In addition, when the pressure pulsation reducing device is provided in an engine of an automobile or at its exhausting portion, the flexibility of the location is exerted.

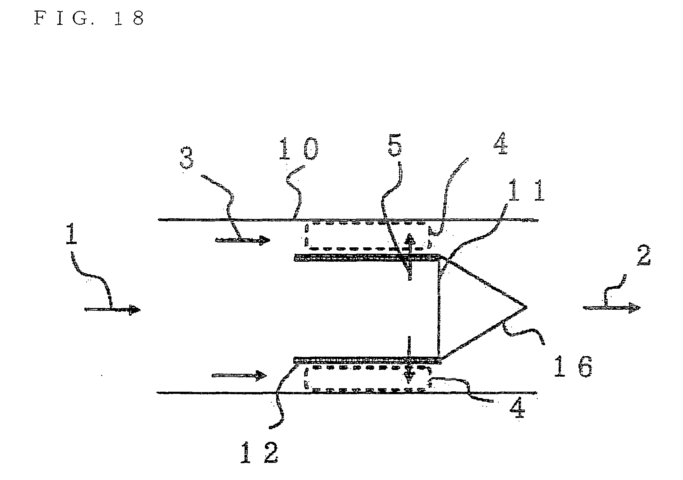

Furthermore, as shown in FIG. 18, a pressure recovery portion 16 having an inclination at an angle equal to or less than a determinate angle, for example, 10 degrees may be provided at a downstream side of the inner tube 11. When thus constructed, since a flow path area of the fluid that has passed through a periphery of the inner tube 11 gradually varies, an energy loss is small, and the pressure at the discharging outlet side of the pressure recovery portion 16 can be recovered up to approximately the same pressure as that of the inlet side of the inner tube 11, resulting in reduction of the pressure loss. This is clear from a Venturi tube having a generally known structure for measuring a flowing amount of fluid.

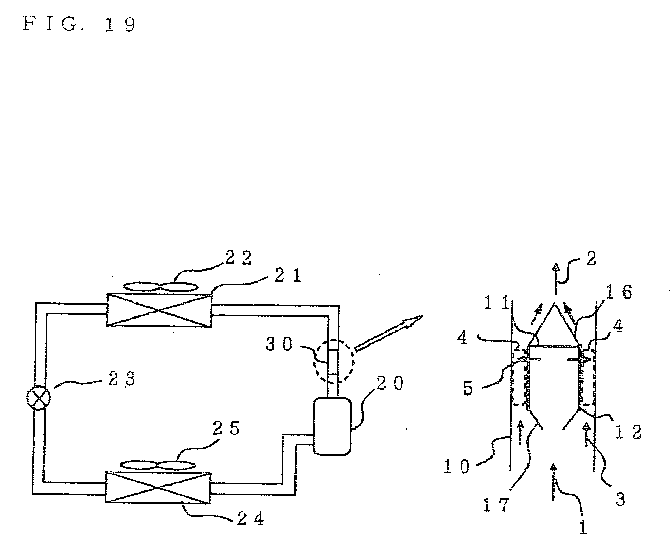

Moreover, as shown in FIG. 19, a flow path guide 17 having an inclination at an angle equal to or less than a determinate angle, for example, 10 degrees may be provided at an upstream side of the inner tube 11. When thus constructed, since the flow path area of the fluid flowing into the inner tube 11 gradually varies, the pressure loss can further be reduced. In addition, the flow path guide 17 may be constructed by means of a curved surface such as a bell mouth.

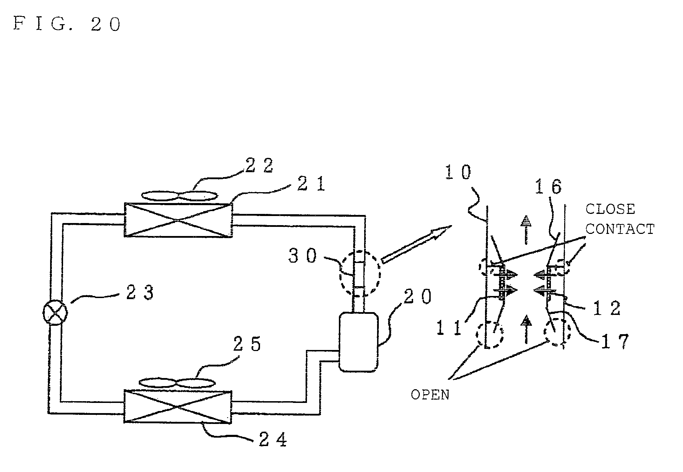

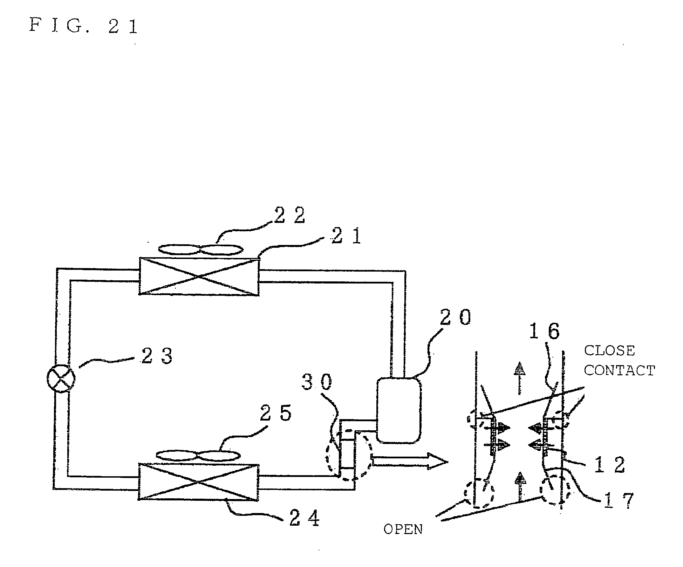

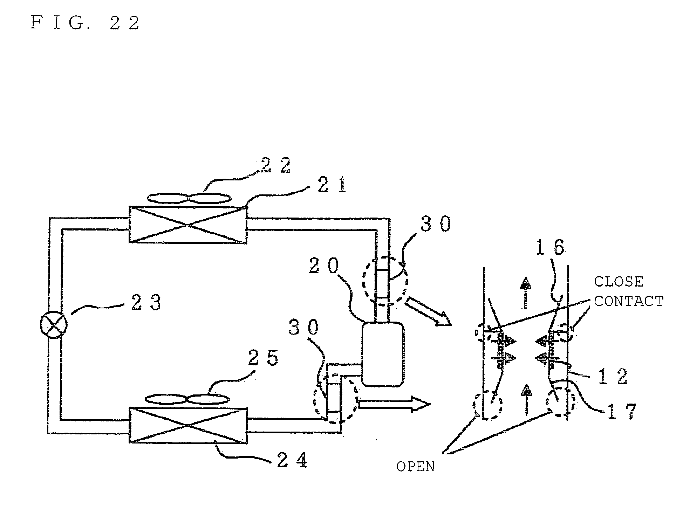

Further, FIGs. 20, 21, and 22 are illustrations showing constructions in which the pressure pulsation reducing device is constructed such that the flow path resistive element is provided between the inner tube 11 and the outer tube 10, and most of the fluid passes through the inner part of the inner tube 11, and the thus constructed pressure pulsation reducing device is applied to the refrigerating cycle device. FIGS. 20, 21 and 22 are illustrations showing constructions in which the pressure pulsation reducing devices is installed at the discharge side, at the intake side, or at both of the intake and discharge sides of the compressor, respectively. Even when the pressure pulsation reducing device is thus constructed, by means of an influence of the flow path resistive element provided at the outer part of the inner tube 11, the flow velocity of the fluid flowing through the inner part of the inner tube is brought to be higher than that flowing through the outer part thereof. Therefore, a difference between the static pressures corresponding to the flow velocity difference occurs, and thereby a secondary flow from the outer part of the inner tube to the inner part thereof occurs. Consequently, the pressure pulsation of the fluid flowing through the inner part of the inner tube is reduced.

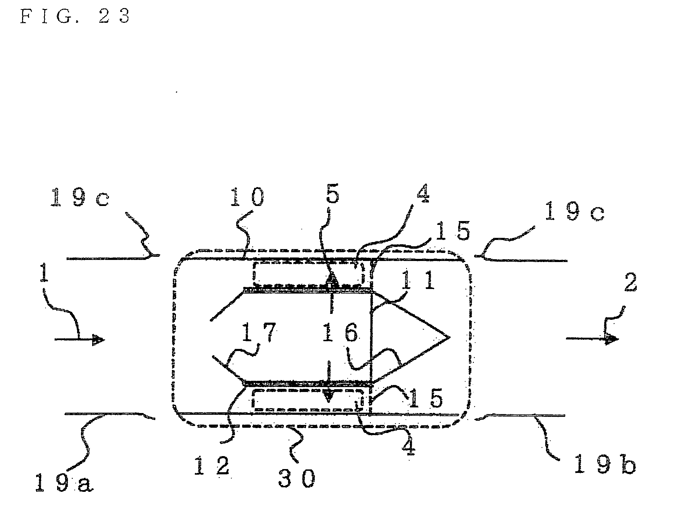

FIG. 23 illustrates the pressure pulsation reducing device 30 that is configured to be a module. The pressure pulsation reducing device is configured to be capable of connecting the piping at the front and back sides thereof, and accordingly, a tube having a connecting portion 19c, such as a tube expansion, can be connected to the device at the inlet side and the outlet side thereof. By thus constructing, the pressure pulsation reducing device 30 can be treated as a general part, and can be easily connected to any flow path, such as an exhaust opening of the refrigerating cycle device of an automobile, or other flow path, where the fluid flows, to reduce the pressure pulsation of the fluid. Further, in a case that the fluid flowing through the inner part is released to the ambient air, such as a case of the exhaust opening of the automobile, the pressure pulsation is transmitted as noise. Accordingly, a noise reduction effect for the periphery is exerted by means of installing the pressure pulsation reducing device at the flow path. When various pressure pulsation reducing devices 30 that can be connected to the piping at one side or both of the front and back sides of the pressure pulsation reducing device are prepared, a pressure pulsation reducing device having optimum diameter or distribution range of the small holes can be attached afterward corresponding to the condition of occurrence of the noise or vibration, namely corresponding to the frequency or the amplitude of the pulsation.

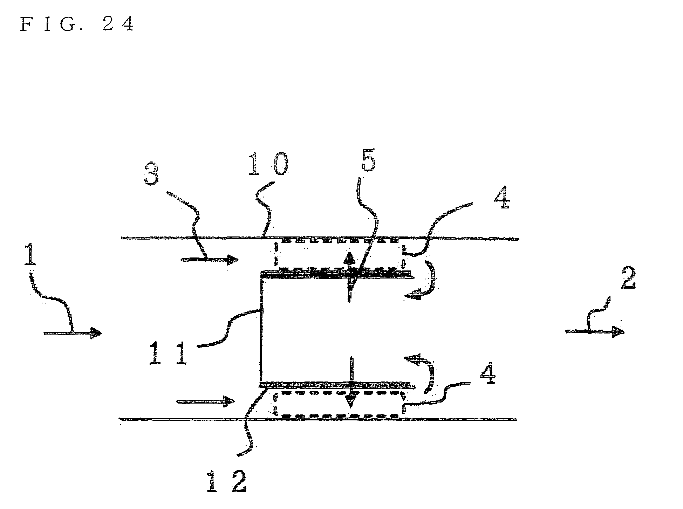

Further, FIG. 24 is an illustration showing that an opening portion of the inner tube 11 is disposed to be positioned on a downstream side of the flow path. Even when thus constructed, since the static pressure of the inner part of the inner tube is brought to be higher than that of the outer part of the inner tube corresponding to the flow velocity of the fluid at the outer part of the inner tube, a secondary flow passing through the small holes from the inner part of the inner tube to the outer part of the inner tube is formed, and pressure pulsation effect is obtained. In addition, the secondary flow is continuously generated by means of supplying the fluid from an open part of the inner tube to the inner part of the inner tube. In this construction, the cross-section area is configured to be large at the outlet side of the inner tube and thereby the flow velocity of the fluid is brought to be low. As a result, not much difference exists between the pressure of the fluid in the inner part of the inner tube and that of the fluid at the outer part of the open portion of the inner tube, and therefore, the fluid corresponding to the amount of the secondary flow that flows through the small holes from the inner part of the inner tube to the outer part of the inner tube is supplied to the inner part of the inner tube from the open portion at the downstream side of the inner tube. Accordingly, even when the open portion of the inner tube is thus constructed to be positioned on the downstream side of the flow path, the pressure pulsation reducing effect can be sustained as is similar to the case that open portion of the inner tube is configured to be positioned on the upstream side. When thus constructed, in a case that the fluid contains lubricating oil or solid powder is mixed in the fluid, or in like case, the lubricating oil, powder, or the like is prevented from being accumulated in the inner part of the inner tube. In other words, it is effective to prevent the pressure pulsation reducing effect from being deteriorated with age due to obturation of the small holes by means of long-term use. However, when thus constructed, since the fluid becomes hard to flow into the inner part of the inner tube compared to the case that the open portion of the inner tube is positioned on the upstream side, the hole-opening rate of the small holes is required to be set relatively small in relation to the case that the open portion of the inner tube is positioned on the upstream side.

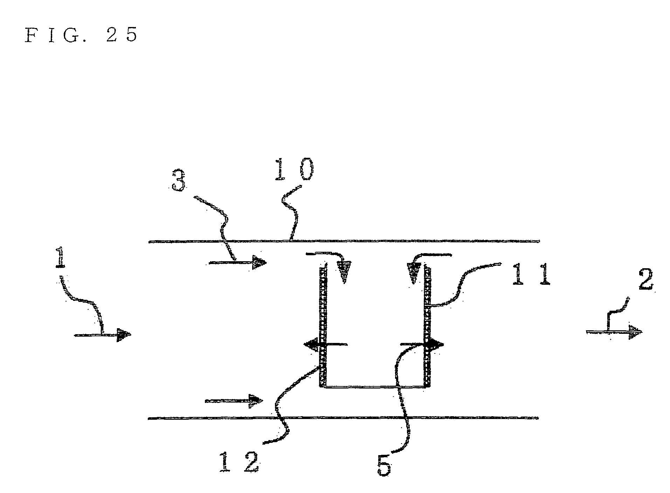

Furthermore, the inner tube may be configured to be provided at a position having an angle in relation to the flow, as shown in FIG. 25, and in this case, since the static pressure in the inner part of the inner tube is also brought to be higher than that in the outer part of the inner tube corresponding to the flow velocity of the fluid at the outer part of the inner tube, a secondary flow passing through the small holes from the inner part of the inner tube to the outer part of the inner tube is formed. Therefore, the pressure pulsation reducing effect can be obtained. Moreover, since the fluid corresponding to the amount of the secondary flow generated from the inner part of the inner tube to the outer part of the inner tube is supplied to the inner part of the inner tube from the open portion of the inner tube, the pressure pulsation reducing effect can be sustained for a long term. Incidentally, in this case, the secondary flow through the small holes becomes hard to be generated at the upstream side compared to the downstream side due to influence of the influx fluid 1, and therefore it is predicted that the flow velocity of the secondary flow through the small holes on the upstream side is decreased. Accordingly, by means of constructing a hole-opening rate of the small holes on the upstream side to be smaller than that at the downstream side, the pressure pulsation reducing effect can be securely obtained. Thus, only by inserting an inner tube, whose one end is open, into an inner part of the outer tube, whatever the inner tube is positioned, the pressure pulsation reducing effect can be obtained.

Incidentally, the pressure pulsation reducing effect of the small holes can be estimated by the following formula. When the degree of sound adsorption of the small holes is defined as a, the cross-section area of the flow path is defined as S, the area of a portion where the small holes are formed is defined as A, and the length in the flow path direction of the portion where the small holes are formed is defined as L, the pressure pulsation reducing amount [dB] is expressed by the following formula.

[Formula 6]

$$TL = 1.05 \times a^{1.4} \times \frac{A}{S} \times L$$

Further, this formula is an empirical formula for estimating a noise reduction amount in the case that air is caused to flow through an inner part of the duct while sound absorbing member is attached to an inside of the duct. However, it is found that the same formula can also be applied to this case. Accordingly, the pressure pulsation reducing amount is proportional to an area and a length of a portion where the small holes are formed. So, it is found that when the small holes are formed as many as possible, the pressure pulsation reducing amount increases.

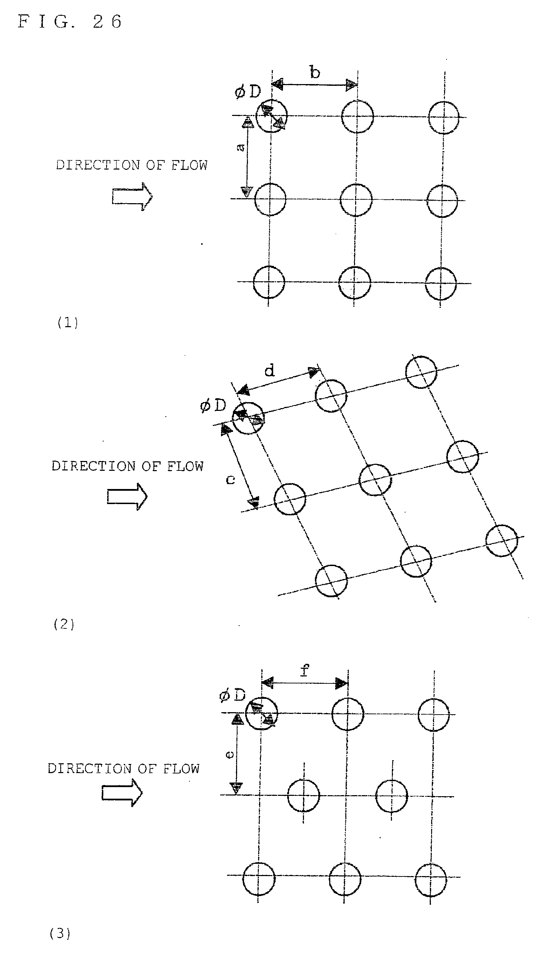

Incidentally, since the word "hole-opening rate" is frequently used in the explanation hereinbefore, a method for calculating the hole-opening rate will be explained here. FIG. 26 is a layout plan illustrating the small holes and the small holes are lined up in pitches in even intervals. In FIG. 26, "(1)" shows a case that the small holes are arranged to be straight in relation to the flow and pitches between the small holes are defined as a and b, "(2)" shows a case that the small holes are arranged to be slanting in relation to the flow, and pitches between the small holes are defined as c and d, "(3)" shows a case that the small holes are arranged to be in a zigzag alignment in relation to the flow, and pitches between the small holes are defined as e and f, and a diameter of each of the small holes is defined as φD. In the above cases, a hole-opening rate R is defined by a ratio of a hole-opening area of the small holes that exists in a rectangle or a rhombus formed by connecting between the centers of the small holes, and is expressed by the following formula.

[Formula 7]

$$\text{Case (1)} \qquad R = \frac{\pi \times D^2 / 4}{a \times b}$$

$$\text{Case (2)} \qquad R = \frac{\pi \times D^2 / 4}{c \times d}$$

$$\text{Case (3)} \qquad R = \frac{\pi \times D^2 / 4}{e \times f}$$

Further, although the explanation is made here, illustrating the case that the small holes are lined up in pitches in even interval, it is not always necessary for the small holes to be lined in the pitches in even intervals. It is empirically found that the pressure pulsation reducing amount is increased when the flow velocity of the secondary flow through the small holes is reduced in the case where the pitch between small holes is long, and when the flow velocity of the secondary flow through the small holes is increased in the case where the pitch between the small holes is short. Accordingly, in a case where unevenness of distribution exists in static pressure at the inner part and the outer part of the inner tube, or in the like case, the pressure pulsation reducing effect is brought to be large by decreasing the pitch between the small holes at a part having a large pressure difference, and increasing the pitch between the small holes at a part having a small pressure difference.

Furthermore, although the explanation is made illustrating a case that the diameters of the small holes are constant, it is not always necessary for the diameter of the small holes to be constant, and the diameter may be differed depending on a portion. In addition, although the explanation is made illustrating a case that the small hole has a circular shape, the small hole is not limited to have the circular shape but a rectangular shape, a rhombus, a triangular shape, a starburst, or any shapes other than the above that is capable of generating the jet flow is applicable.

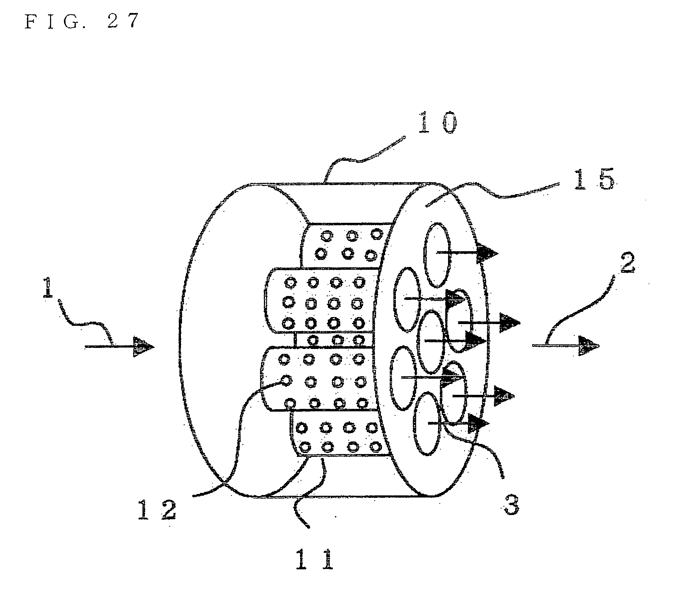

Moreover, although the explanation is made illustrating a case that the inner tube disposed in the outer tube is one in number, it is not limited to that, and a plurality of inner tubes may be provided in the outer tube, as shown in FIG. 27. FIG. 27 illustrates a construction in which a flow path resistive element 15 that serves as an inner tube supporting member is provided at an outer part of the inner tube, and the main flow 3 is configured to flow through the inner part of a plurality of inner tubes 11. Since the flow velocity in the inner part of the inner tube is high, the secondary flow flowing from the outer part of the inner tube to the inner part of the inner tube is generated. Incidentally, a structure of the inner tube supporting member 15 is configured to enable a plurality of inner tubes 11 to be fixed to the outer tube 10. In addition, although the explanation is made illustrating a case that the main stream flows through the inner part of the inner tube, the plurality of inner tubes can also be provided in the outer tube even in a case that the main stream flows through the outer part of the inner tube. As explained earlier, the pressure pulsation reducing amount is proportional to an area of a wall surface where the small holes are formed, and is in inverse proportion to a cross-section area of the flow path. Accordingly, when the plurality of inner tubes are thus provided in the outer tube, an area of the small hole part can be enlarged in relation to the same flow path cross-section area, and far larger pressure pulsation reducing effect can be expected. In particular, this is an effective method in a case that the flow path cross-section area is large.

Although the inner tube which changes the flow in the flow path, a small hole formed in the wall surface, and the flow path resistive element, which is a device for obtaining the pressure difference so as to eliminate the pressure pulsation energy of the fluid are explained lumping together, as an explanation of the pressure pulsation reducing device of the present invention, it is natural to say that a device, in which only one or a plurality of flow path resistive elements is provided in the flow path formed of the piping, the flow of the fluid is changed by means of the flow path resistive element, and the pressure difference for eliminating the pressure pulsation energy is thereby obtained, is also applicable. It is also applicable that, for example, a collision element or a diaphragm-shaped partition for partially interrupting the flow is provided in the flow path, and the jet flow of the changed flow may be utilized. However, in this pressure pulsation reducing device, although the pressure pulsation of the fluid can be effectively reduced, the pressure loss is brought to be large. Accordingly, in the pressure pulsation reducing device only using the flow path resistive element, problems, such as a space requirement or pressure loss caused by variation of the diameter, can be eliminated by means of scarcely changing the outer diameter of the piping, namely constructing the diameter of the tube in an extent similar to the diameter of the tubes on the front and back sides. Thereby, the device capable of reducing the pressure pulsation that does not require the far larger specific space can be obtained. However, it is more preferable to reduce the pressure loss by means of separating two roles, i.e., to change the flow such as the main stream and the secondary flow, and to obtain the pressure difference by means of the closed inner tube or the like, as different constructions as shown in FIGs. 1 and 20. As described above, the pressure pulsation reducing device of the present invention being provided with a flow path, which transmits the pressure pulsation, and a flow path resistive element disposed in the flow path, which changes the flow of the fluid flowing through the inner part of the flow path and generates jet flow so as to reduce the pressure pulsating energy of the fluid, wherein a diameter of a tube portion in which the flow path resistive element is disposed is made substantially the same extent of diameter as that of the piping on the front and back sides, namely the diameter having approximately the same extent of the diameter of the piping from a source of the pressure pulsation to be released, is obtained.

In a case that the pressure pulsation reducing device of the present invention being provided with a flow path, which transmits the pressure pulsation, and a flow path resistive element disposed in the flow path, which changes the flow of the fluid flowing through the inner part of the flow path and generates the jet flow so as to reduce the pressure pulsating energy of the fluid, wherein a diameter of a tube portion in which the flow path resistive element is disposed is made substantially the same extent of diameter as that of the piping on the front and back sides, namely the diameter having approximately the same extent of the diameter of the piping from a source of the pressure pulsation to be released is used for the refrigerating cycle, even when the pressure pulsation reducing device is installed in the vicinity of the compressor, the pressure pulsation can be suppressed using the same container of the outdoor unit or the like for housing the tube portion together with the compressor, as the existent one. As a result, reducing the vibration or the noise can be reduced and a device having good efficiency can be obtained. In a case that the pressure pulsation reducing device is used for an exhaust gas muffler of an automobile, since a diameter of the piping is suppressed, the pressure pulsation reducing device is substantially utilized for a fuel tank or the like, which is attached to a narrow space, and therefore, not only an easy-to-use automobile can be obtained, but also the flexibility of design is improved and thereby a product having high commercial value such as styling capability can be obtained. Since the diameter of the tube at an attaching portion of the muffler of the present invention can be constructed to the same extent of the diameter of a portion connected to the compressor of the refrigerating cycle or an engine for use in the automobile, utilizing of the space is extremely effective.

The pressure pulsation reducing device of the present invention is provided with the flow path, which transmits the pressure pulsation, the inner tube, which is disposed in the flow path, as shown in FIG. 1, and configured to allow most of the fluid flowing through the inner part of the flow path to flow through its periphery, the plurality of small holes formed in the inner tube, through which the jet flow expels to the flow path due to the pressure difference between the inner part and the outer part of the inner tube, and further, the contracted flow section is provided at the outer peripheral side, or the contracted flow section is provided at the inner peripheral side, as shown in FIG. 20. As described above, although the pressure pulsation reducing device is configured to reduce the pressure pulsation of the contracted flow section by means of expelling the jet flow through the small holes from, for example, the inner tube to the contracted flow section provided at the outer periphery, the inner part of the inner tube may serve as the contracted flow section. However, the foreign material, oil, or the like contained in the fluid and caused to flow together is easy to pass through and hard to clog the inner tube when the jet flow is expelled to the outer part at the outer periphery side of the inner tube, rather than otherwise. This is because, the main stream flows through the outer peripheral portion of the tube portion. On the contrary, in a structure configured to form the main stream at the center part, since a flow path guide is easy to be installed and the pressure loss is easy to suppress, reduction of the efficiency of the device can be suppressed to the minimum.

The pressure pulsation reducing device of the present invention is provided with the inner tube supporting member that fixes the aforementioned inner tube, configured in a manner such that the inner tube does not disturb the flow of the flow path at the outer part of the inner tube, to the flow path. Thereby, it becomes easy to let the fluid flow through the outer part of the inner tube. In addition, the pressure pulsation reducing device of the present invention is configured to have a structure in which the inner tube is directly attached to the flow path wall.

The pressure pulsation reducing device of the present invention is configured to form the open end of the inner tube to have a shape having an angle more than determinate degree in relation to the radial direction. Alternatively, the pressure pulsation reducing device of the present invention is configured to form a notch at the open end of the inner tube. As a result, a defect such as occurrence of a resonance, or the like can be prevented, even when the pressure pulsation reducing device such as the inner tube, which serves as a disturbance or a catch pan against the flow, is provided in the flow path that allows the fluid having variable flow velocity to flow.

The pressure pulsation reducing device of the present invention is provided with a flow path through which the pressure pulsation is transmitted, a first inner tube disposed in the flow path and configured for most of the fluid flowing through the inner part of the flow path to flow through the periphery, a plurality of the small holes formed in the first inner tube, through which the jet flow is expelled to the flow path due to the pressure difference between the inner part and the outer part of the inner tube, and a second inner tube serving as an insertion tube that is inserted into the inner part of the first inner tube. In addition, one end of the second inner tube is fixed to the open end of the first inner tube, and this is also applicable to a high flow velocity or the like. Further, the pressure pulsation reducing device of the present invention is configured for a fixing portion of the second inner tube to have a hole so that the fixing portion has a hole-opening rate equal to or more a the determinate hole-opening rate. The pressure pulsation reducing device of the present invention is configured to form a tip end of the insertion tube into a shape having an angle equal to or more than a determinate angle in relation to the radial direction of the insertion tube. The pressure pulsation reducing device of the present invention is configured for the inner part of the insertion tube to have a rough surface. The pressure pulsation reducing device of the present invention is configured for the outer part of the insertion tube to have a rough surface.

The pressure pulsation reducing device of the present invention is configured for the inner surface of the inner tube to be+a rough surface. The pressure pulsation reducing device of the present invention is configured for the diameter of the small hole to be equal to or less than 10 mm. The pressure pulsation reducing device of the present invention is configured for the hole-opening rate, which is a ratio of sum of the cross-section area of the small holes and the cross-section area of the flow path to be equal to or less than 10%.

The pressure pulsation reducing device serving as a flow path device of the present invention described above is configured to reduce the pressure pulsation by disposing a tube at the inner part of the outer tube as a flow path. However, the construction is not limited to that formed of the outer tube and the inner tube. That is, a partition plate may alternatively be inserted into the outer tube to divide the flow path so long as the device is configured to provide two or more flow paths in a flow path, and to expel the jet flow through the small holes from a flow path, in which the flow velocity is low, to another flow path, in which the flow velocity is high, so as to reduce the pressure pulsation. In other words, a flow path dividing device disposed in the inner part of the outer tube, through which the fluid flows, is provided. The flow path dividing device divides the inner part of the outer tube in a manner so as to separate the flow of the fluid in the outer tube into a plurality of flows, and is fixed to and supported by the outer tube. The flow velocity in a t lea se one flow path out of the plurality of flow paths divided by the flow path dividing device is reduced by means of the flow path resistive element. A plurality of small holes are provided in the flow path dividing device between the flow path having the flow path resistive element and the flow path of high flow velocity. The plurality of small holes are distributed allowing the flow path having the flow path resistive element and the flow path of high flow velocity to communicate with each other. The structure is sufficient to be constructed such that the pressure pulsation transmitted by the fluid is reduced by means of expelling the jet flow through the small holes from a side of a low flow velocity to a side of a high flow velocity made by the flow path dividing device by means of the pressure difference due to the difference between the flow velocities of the flow paths, which is divided by means of the flow path dividing device. That is, without being stuck to metal made piping arrangement, a construction without limitation in a shape or dimension, such as plastics can be easily manufactured. Further, when the present invention is constructed by means of only a flow path resistive element, the shape becomes simpler and it is sufficient that only the diaphragm portion, a projection, or the like is attached to an inner part of the metal made piping in a similar manner.

Thus, when the flow path dividing device for dividing the inner part of the outer tube disposed at the inner part of the outer tube, through which the fluid flows, is provided; the fluid is caused to flow into a plurality of flow paths in the inner part of the outer tube as separated flows, the flow velocity in at least one flow path out of the plurality of flow paths is caused to be low, so as to provide a flow path with a lower flow velocity and another flow path with a higher flow velocity on both sides of the flow path dividing device; and the jet flow is expelled through a plurality of small holes distributively provided to allow the two flow paths to communicate with each other, from the side of low flow velocity to the side of high flow velocity by means of the pressure difference due to the difference of the flow velocities in the divided flow paths, the pressure pulsation transmitted by the fluid having a high flow velocity can be reduced by the expelled jet flow. Therefore, even in a case of a flow path having whatever construction, or whatever shape, the pressure pulsation can easily be reduced. Further, in the present invention, the pressure pulsation covering a broadband can be reduced without requiring a specific shape or a particular structure. In other words, the pressure pulsation having wavelengths covering the broadband can be reduced by means of employing a simple construction such as that an auxiliary flow path for the jet flow to be expelled to a main flow path, through which fluid is mainly caused to flow, is provided. Further, since the pressure pulsation reducing device is not provided with a movable portion, the same is easy for maintenance, and hard to be broken down and is provided with high reliability.

**Claims**

1.  A flow path device, comprising:

    an inner tube disposed in an inner part of a flow path for allowing a fluid to flow, causing the fluid to flow through an inner part and an outer part of the inner tube, to be separated flows in the flow path;
    a plurality of small holes distributively provided in the inner tube for allowing the inner part and the outer part of the inner tube to communicate with each other; and
    a flow path resistive element provided in the outer part or the inner part of the inner tube, for causing a difference of a flow velocity of the fluid between in the outer part and in the inner part of the inner tube,

    wherein, a jet flow is expelled through the small holes from one side to the other side out of the inner part and the outer part of the inner tube by a difference of pressure between in the inner part and in the outer part of the inner tube, so as to reduce a pressure pulsation transmitted in the flow path.

2.  The flow path device according to Claim 1, wherein an inner tube supporting member for attaching the inner tube onto a wall surface of the flow path is provided in a manner such that the flow of the outer part of the inner tube is not disturbed, and wherein the flow path resistive element is provided in the inner part of the inner tube, and wherein a flow velocity in the inner part of the inner tube is configured to be substantially lower than a flow velocity in the outer part of the inner tube.

3.  The flow path device according to Claim 1, wherein the flow path resistive element is provided between the inner tube and an outer tube, and wherein a flow velocity in the outer part of the inner tube is configured to be substantially lower than a flow velocity in the inner part of the inner tube.

4.  The flow path device according to Claim 1, 2, or 3, wherein an inlet side end portion of the inner tube for allowing the fluid to flow into the inner tube is opened in a form of a slanting shape having an angle equal to or more than a determinate angle, or is opened in a form of a notch.

5.  The flow path device according to Claim 1, 2, or 3, wherein the length of the inner tube in an axial direction of the fluid flowing therethrough varies depending on a difference of positions at an outer periphery side.

6.  The flow path device according to Claim 1, 2, 4, or 5, wherein an insertion tube penetrating from the inlet side end portion of the inner tube to the inner part of the inner tube is provided, such that the fluid is configured to flow into the inner part of the inner tube through the insertion tube.

7.  A flow path device, comprising:

    a flow path through which a pressure pulsation is transmitted;
    an inner tube disposed in the flow path, configured to allow most of fluid flowing through an inner part of the flow path to flow through a periphery of the inner tube;
    a plurality of small holes disposed in an outer periphery of the inner tube, for allowing an inner part of the inner tube to communicate with an outer part of the inner tube, and allowing a jet flow to be expelled toward the flow path by means of a pressure difference between in the inner part of the inner tube and in the outer part of the inner tube; and
    an insertion tube inserted into the inner part of the inner tube for causing the fluid to flow into the inner part of the inner tube.

8.  The flow path device according to Claim 6 or 7, wherein the insertion tube is opened such that a fixing portion for fixing the insertion tube to the inlet side end portion of the inner tube is configured to have a hole-open rate equal to or more than a determinate hole-open rate.

9. The flow path device according to any one of Claims 6 through 8, wherein a tip end of the insertion tube on an inner part side of the inner tube is opened in a form of a slanting shape having an angle equal to or more than a determinate angle.

10. The flow path device according to any one of Claims 6 through 9, wherein at least one of an internal wall surface of the insertion tube and an external wall surface of the insertion tube is configured to be a surface rougher than the wall surface of the flow path.

11. The flow path device according to any one of Claims 1 through 10, wherein an interval in a direction approximately orthogonal to a flow in the inner tube, between the plurality of small holes, which are distributively provided in an outer peripheral surface of the inner tube for allowing the inner part of the inner tube to communicate with the outer part of the inner tube, is configured to be smaller in relation to a wavelength of the pressure pulsation of the fluid.

12. The flow path device according to any one of Claims 1 through 11, wherein a diameter of the small holes is configured to be equal to or less than 10 mm.

13. The flow path device according to Claim 12, wherein a diameter of the plurality of small holes which are distributively provided in the outer peripheral surface of the inner tube, for allowing the inner part of the inner tube to communicate with the outer part of the inner tube, is configured to be in inverse proportion to the number of the small holes distributed.

14. The flow path device according to any one of Claims 1 though 13, wherein a hole-opening rate defined by a ratio of the sum of cross-section areas of the small holes to an area of the wall surface of the flow path where the small holes are formed, is configured to be equal to or less than 10%.

15. The flow path device according to any one of Claims 1 though 15, wherein an area in the outer peripheral surface of the inner tube for distributing the small holes for allowing the inner part of the inner tube to communicate with the outer part of the inner tube is configured to be greater than a flow path area where most of the fluid flows.

16. A flow path device, comprising:

at least one flow path resistive element disposed in an inner part of a tube for allowing a fluid to flow, to generate a whirlpool by means of changing a flow of the fluid in the tube;
a flow path resistive element supporting tube for supporting the flow path resistive element, wherein a diameter of the tube in which the flow path resistive element is disposed is approximately a same extent of a diameter of adjoining piping to be connected, and

wherein, a pressure pulsation of the fluid flowing through an inner part of the tube is reduced by means of changing a flow of the fluid, while scarcely changing the diameter of the piping.

17. The flow path device according to any one of Claims 1 through 16, wherein a flow path guide which gradually changes an area of an inlet side end portion into which the fluid flows, having a higher flow velocity, from a large area to a small area, or gradually changes an area of an outlet side end portion from which the fluid flows out, having a higher flow velocity, from a small area to a large area, when the flow of the fluid is separated or the flow of the fluid is changed, is provided.

18. The flow path device according to any one of Claims 1 though 17, wherein an internal wall surface of the inner tube or a surface of the flow path resistive element is configured to be a surface rougher than the wall surface of the flow path or the internal wall surface of the tube.

19. A refrigerating cycle device wherein the flow path devices according to any one of Claims 1 through 18 is disposed in a circuit in which a refrigerant circulates.

20. A pressure pulsation reducing device comprising:

a flow path dividing device disposed in an inner part of an outer tube in which a fluid flows, for dividing the inner part of the outer tube to separate the fluid into a plurality of flows in the outer tube, being supported by means of the outer tube;

a flow path resistive element for causing a flow velocity of at least one flow path out of a plurality of flow paths divided by means of the flow path dividing device to be low; and

a plurality of small holes distributively provided in the flow path dividing device between a flow path having the flow path resistive element and a flow path having a high flow velocity, allowing the two flow paths to communicate with each other,

wherein a pressure pulsation transmitted by the fluid is reduced by means of expelling a jet flow through the small holes from a side where a flow velocity is low to a side where a flow velocity is high in the flow path dividing device in accordance with a difference of pressure caused by a difference of the flow velocity between in the flow paths divided by means of the flow path dividing device.

21. A method for reducing a pressure pulsation, comprising the steps of:

separating a flow of a fluid into a plurality of flow paths in an outer tube by means of providing a flow path dividing device disposed in an inner part of an outer tube in which the fluid to flows, for dividing an inner part of the outer tube;

providing a flow path having a low flow velocity and the flow path having a high flow velocity on both sides of the flow path dividing device, by means of causing a flow velocity in at least one flow path out of the plurality of flow paths to be low:

expelling a jet flow through a plurality of distributively provided small holes for allowing two of the flow paths to communicate with each other, from a side where the flow velocity is low to a side where the flow velocity is high in accordance with a pressure difference caused by a difference of the flow velocity between in the flow paths divided; and

reducing the pressure pulsation transmitted by the fluid having the high flow velocity, by means of the expelled jet flow.

22. A method for reducing a pressure pulsation, comprising the steps of:

providing a flow path resistive element disposed in an inner part of a tube in which a fluid flows, for dividing a flow of the fluid in the tube;

reducing a pressure pulsation transmitted by the fluid by means of mutual flows having different flow velocities, being divided by the flow path resistive element, upon supporting the flow path resistive element on an inner wall surface of the tube; and

connecting the tube in which the flow path resistive element is disposed, to piping having a diameter of approximately the same extent as a diameter of the tube adjoining thereto.

FIG. 1

FIG. 2

FIG. 3

OID-HOLE BOARD

CATTERING

WHIRLPOOL

JET FLOW    HEARING

INNER PART OF HOLE

P 1

P 2

PRESSURE
DIFFERENCE

TEADY PRESSURE

COORDINATE IN FLOWING DIRECTION

FIG. 4

$P1+\Delta P$

STEADY PRESSURE

$P2+\Delta P$

INNER PART OF
VOID-HOLE PORTION

COORDINATE IN FLOWING DIRECTION

(1)

STEADY PRESSURE

$P1-\Delta P$

INNER PART OF
VOID-HOLE PORTION

$P2-\Delta P$

COORDINATE IN FLOWING DIRECTION

(2)

F I G. 5

GENERATION

SCATTERING

PRESSURE FLUCTUATION

DYNAMIC ENERGY

TIME

FIG. 6

(1) EXPERIMENT 1

(2) EXPERIMENT 2

FIG. 7

F I G. 8

F I G. 9

SCREW-FIXING

A-A CROSS-SECTION

FIG. 10

A-A CROSS-SECTION

F I G.  1 1

A-A CROSS-SECTION

FIG. 12

A-A CROSS-SECTION

FIG. 13

CUT A THREAD AT INNER SURFACE

A-A CROSS-SECTION

F I G. 1 4

CUT A THREAD AT INNER SURFACE

A-A CROSS-SECTION

FORM A HOLE AT
the LID 14

FIG. 15

FIG. 16

FIG. 17

EXHAUST    3 0

INHALING

4 3    4 2    4 1

FIG. 18

F I G. 1 9

FIG. 20

FIG. 21

FIG. 22

FIG. 23

FIG. 24

EP 1 731 854 A1

FIG. 25

43

FIG. 26

DIRECTION OF FLOW

(1)

DIRECTION OF FLOW

(2)

DIRECTION OF FLOW

(3)

FIG. 27

## INTERNATIONAL SEARCH REPORT

| | International application No. |
|---|---|
| | PCT/JP2005/005897 |

A.  CLASSIFICATION OF SUBJECT MATTER
   Int.Cl$^7$  F25B41/00, F16L55/04, F04B11/00

According to International Patent Classification (IPC) or to both national classification and IPC

B.  FIELDS SEARCHED

Minimum documentation searched (classification system followed by classification symbols)
   Int.Cl$^7$  F25B41/00, F16L55/04, F04B11/00

Documentation searched other than minimum documentation to the extent that such documents are included in the fields searched
   Jitsuyo Shinan Koho        1922-1996   Jitsuyo Shinan Toroku Koho   1996-2005
   Kokai Jitsuyo Shinan Koho  1971-2005   Toroku Jitsuyo Shinan Koho   1994-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 48061/1976(Laid-open No. 139562/1977) (Hitachi, Ltd.), 22 October, 1977 (22.10.77), Full text; Figs. 1 to 7 (Family: none) | 1-22 |
| A | EP 1136744 A1  (AEROQUIP CORP.), 26 September, 2001 (26.09.01), Full text; Figs. 1 to 7 & CA 2302566 A1 | 1-22 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 July, 2005 (01.07.05) | 19 July, 2005 (19.07.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 731 854 A1**

| INTERNATIONAL SEARCH REPORT | International application No. |
|---|---|
| | PCT/JP2005/005897 |

C (Continuation). DOCUMENTS CONSIDERED TO BE RELEVANT

| Category* | Citation of document, with indication, where appropriate, of the relevant passages | Relevant to claim No. |
|---|---|---|
| A | US 6244299 B1 (AEROQUIP CORP.),<br>12 June, 2001 (12.06.01),<br>Full text; Figs. 1 to 7<br>& DE 98023962 U1 | 1-22 |

Form PCT/ISA/210 (continuation of second sheet) (January 2004)

47

**EP 1 731 854 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6101794 A
- JP 11270429 A

**Non-patent literature cited in the description**

- **M.S. HOWE.** Attenuation of sound in a low Mach number nozzle flow. *Journal of Fluid Mechanics,* 1979, 209-229